# EUROPEAN PATENT SPECIFICATION

(11) **EP 0 624 991 B1**
(45) Date of publication and mention of the grant of the patent: **04.08.1999**
(21) Application number: 94201317.8
(22) Date of filing: 10.05.1994
(51) Int. Cl.: H04N 9/80

(54) **Arrangement for recording or reproducing data reduced video information**
Anordnung zur Aufzeichnung und Wiedergabe von datenreduzierter Videoinformation
Arrangement pour l'enregistrement et la reproduction d'informations vidéo comprimées

(30) Priority: 14.05.1993 EP 93201392
(43) Date of publication of application: 17.11.1994
(73) Proprietor: Koninklijke Philips Electronics N.V., 5621 BA Eindhoven (NL)
(72) Inventor: Rijckaert, Albert Maria Arnold, NL-5656 AA Eindhoven (NL); Persoon, Eric Hendrik Jozef, NL-5656 AA Eindhoven (NL); van Gestel, Wilhelmus Jacobus, NL-5656 AA Eindhoven (NL); De With, Peter Hendrik Nelis, NL-5656 AA Eindhoven (NL)
(74) Representative: van der Kruk, Willem Leonardus

(56) References cited:
- EP-A- 0 453 229
- EP-A- 0 541 029

## Description

The invention relates to an arrangement for recording, at a predetermined recording speed, a digital video signal in a track on a record carrier, the recording arrangement comprising
- an input terminal for receiving the digital video signal,
- data compression means for data reducing the digital video signal so as to obtain data reduced video information in the form of a plurality of datablocks, each datablock defining a subpicture of a plurality of subpictures in which a picture is divided, a datablock comprising a number of n DC coefficients, where n is an integer for which holds that n > 1, a plurality of most significant AC coefficients and a plurality of least significant AC coefficients,
- formatting means for including datablocks in a plurality of packets for recording in a track, a packet comprising a first packet portion including a synchronisation word and an identification word, a second packet portion comprising data reduced video information,
- recording means for recording the plurality of packets in a track on the record carrier.

Furthermore, the invention relates to a method of recording, to a reproduction arrangement and to a record carrier obtained with the recording arrangement.

A recording arrangement as defined in the opening paragraph is known from published European patent application no. 492,704A1 (PHN 13.546). The arrangement is in the form of an arrangement for recording a digital video signal in slant tracks on a magnetic record carrier. It should however be noted that the invention is not restricted to the use in helical scan digital video recorders, but is equally well applicable in the recording and reproduction on/of disc-like record carriers, either magnetic or optical record carriers.

Various proposals have been done to re-arrange the sequence of the data reduced video information obtained from the data compression means, prior to recording the information on the record carrier, so as to enable reproduction in a so-called feature mode. A feature mode in helical scan recorders/reproducers means that the transport speed of the longitudinal record carrier is other than the nominal speed, which is the speed during recording. In disk recorders/reproducers, the reproducing means, which include a magnetic or optical head, have a radial velocity in the feature mode which differs from the radial velocity during recording.

For a description of a feature mode reproduction in helical scan recorders/ reproducers, reference is made to European patent application no. 92200069.0 (PHN 13.952), corresponding to EP-A-0 551 672, published on 21 July 1993. In this document, the DC coefficients and the most significant AC coefficients of datablocks are combined and recorded in a start portion of each track.

The invention aims at further improving the format of the video signal recorded in the track on the record carrier, resulting in an improved reproduction in a feature mode.

The arrangement in accordance with the invention is characterized in that, the formatting means are adapted to store the information included in a first and a second datablock in the second packet portion of a first packet, such that the n DC coefficients of the first datablock are stored first, the plurality of most significant AC coefficients of the first datablock are stored next, the n DC coefficients of the second datablock are stored last in the second packet portion, and the plurality of most significant AC coefficients of the second datablock are stored before the n DC coefficients of the second datablock in the second packet portion.

The invention is based on the following recognition. The invention is based on the recognition that the DC coefficients and the most significant AC coefficients of a datablock should be stored in a packet as closely as possible to a synchronisation word. Therefore, the DC coefficients and the most significant AC coefficients of the first datablock are stored as closely as possible behind the synchronisation word in the first packet. Moreover, the DC coefficients and most significant AC coefficients of the second datablock are stored as far as possible at the back of the packet, so that they are stored closely as possible to, and before, the synchronisation word in the following packet.

In an embodiment of the invention, all datablocks can be stored in the same way in the packets. That means that, for recording further (third and fourth) datablocks, the arrangement may be characterized in that, the formatting means are further adapted to store the information included in a third and a fourth datablock in the second packet portion of a second packet, such that the n DC coefficients of the third datablock are stored first, the plurality of most significant AC coefficients of the third datablock are stored next, the n DC coefficients of the fourth datablock are stored last in the second packet portion, and the plurality of most significant AC coefficients of the fourth datablock are stored before the n DC coefficients of the fourth datablock in the second packet portion, where n is an integer for which holds that n > 1.

It should be noted that there need not be a restriction to the value of 2 for the number of datablocks to be stored in the second packet portion of a packet. In general, it is thus possible that data corresponding to a further datablock is stored in the second packet portion in between the locations in which the data corresponding to the first and the second datablock are stored.

In a further embodiment, the arrangement may be either characterized in that, the formatting means being adapted to store the information included in a fifth datablock and auxiliary signal information in the second packet portion of a third packet, such that the n DC coefficients of the fifth datablock are stored first, the plurality of most significant AC coefficients of the fifth datablock are stored next, and the auxiliary signal information is stored last in the second packet portion, or characterized in that, the formatting means being adapted to store the information included in a fifth datablock and auxiliary signal information in the second packet portion of a third packet, such that the auxiliary signal information is stored first, the n DC coefficients of the fifth datablock are stored last, in the second packet portion, and the plurality of most significant AC coefficients of the fifth datablock are stored before the n DC coefficients of the fifth datablock in the second packet portion. These embodiments offer the possibility to record each time five datablocks and an auxiliary signal in three subsequent packets.

During reproduction in a feature mode, the reproducing heads cross the tracks on the record carrier. When crossing a track, the reproduction arrangement is capable of shortly reading information from the track just crossed. If the head crosses a track just at the location where a synchronisation word and the identification word are recorded, this synchronisation word can be detected, and the reproducing arrangement can also read the information in that same track which is located in closely before and/or after the synchronisation word. This enables the decoding of the DC coefficients and the most significant AC coefficients of a datablock, so as to obtain a replica of the uncompressed video information corresponding to a subpicture, using the identification word, which is an identification of the packet, and thus of the position of the subpicture on the screen, which has its video information stored in said packet. Such decoding is sufficient for reproduction of the video signal with an acceptable visual quality in the feature mode.

The arrangement may be further characterized in that it comprises count value generating means for generating a count value corresponding to the number of bytes needed to represent the AC coefficients of the datablocks included in the second packet portion of a packet.
This measure, although described in combination with the measure of claim 1, has significance for itself, as also in the case that only one datablock would have been stored in the second packet portion of a packet, it supplies information about whether the amount of space available in a second packet portion is sufficient or not to store all the AC coefficients of the datablock.

The arrangement is further characterized in that, the count value generating means being adapted to generate for the i-th packet, a count value CVᵢ, corresponding to the number of bytes needed to represent the AC coefficients of the (2i-1)-th and (2i)-th datablock, the formatting means further being adapted to store the count value CVᵢ in the second packet portion of the i-th packet, where i is 1 or 2. Moreover, if the count value CVᵢ is smaller than or equal to the number of bytes Nᵢ available in that part of the second packet portion of the i-th packet located between the DC coefficients of the (2i-1)-th and (2i)-th datablock stored in said second packet portion, the formatting means are further adapted to store least significant AC coefficients of the (2i-1)-th datablock after the most significant AC coefficients of the (2i-1)-th datablock in said part of said second packet portion and least significant AC coefficients of the (2i)-th datablock are stored before the most significant coefficients of the (2i)-th datablock in said part of said second packet portion.
As a result, if the amount of space available in a second packet portion is insufficient to store all the AC coefficients of a datablock, the surplus of coefficients is stored in one of the other packets.

It should be noted that the digital video information to be stored in a packet generally includes parity information. This parity information is required to carry out an error correction step during reproduction. This parity information can be stored in various positions in a packet. The parity information can, as an example, be stored in a third packet portion in the packet. This third packet portion can be accommodated after the second packet portion in the packet, or can be accommodated between the stored AC coefficients in the second packet portion of a packet. This last possibility means that the second packet portion is divided into two parts.

Embodiments of the record carrier and reproducing arrangement in accordance with the invention are defined in the claims 15 to 18.

It should be noted that EP-A 453 229 discloses an encoding system for variable length encoding of a video signal comprising 16:9 pictures. Each picture is divided into two portions, a centre screen portion of a 4:3 part of the picture and a side screen portion which appears on both sides of the centre screen portion. The pixels in the centre and the side screen portions are divided into N groups of pixels each. A group of pixels of the centre screen portion and a group of pixels of the side screen portion is combined to form a block and an orthogonal transform is carried out on the information in a block. The encoded group of pixels of the centre screen is subsequently stored in a packet from the beginning of that packet in a direction towards the end of the packet. The encoded group of pixels of the side screen is subsequently stored in said packets from the other end of that packets in a direction towards the beginning of the packets.

These and other aspects of the invention will be further explained with reference to embodiments of the arrangement in the following figure description, in which
figure 1 shows an embodiment of the recording arrangement,
figure 2 shows a picture being divided into subpictures,
figure 3 shows the division of the video information of a subpicture over six DCT blocks,
figure 4 shows the sequence of packets,
figure 5 shows the format of three subsequent packets,
figure 6 shows the DC information for two datablocks,
figure 7 shows the contents of the second packet portion of a packet in which all DC and AC information of two datablocks are stored, and an open space remains,
figure 8 shows the contents of the second packet portion of a packet in which DC and AC information of two datablocks are stored, such that no open space remains,
figure 9 shows two examples of the contents of the second packet portion of a third packet,
figure 10 shows the envelope of the video signal read from the record carrier, when a track is crossed during read-out in a feature mode,
figure 11 shows three examples of signals read out during the feature mode,
figure 12 shows the AC information of a datablock,
figure 13a shows the AC information of figure 12, divided into 8-bit bytes, to be stored in the second packet portion of a packet,
figure 13b shows that part of the AC information of figure 13a that is stored in a temporary memory,
figure 14 shows the storage of the AC information of figure 13a into the second packet portion memory,
figure 15a shows the AC information of a second datablock that should be stored in the same second packet portion,
figure 15b shows that part of the AC information of figure 15a that is stored in a temporary memory,
figure 15c shows the part of the AC information shown in figure 13b and in addition the surplus information of the AC information of figure 15a,
figure 16 shows the storage of the AC information of figure 15a in the second packet portion memory,
figure 17 and 18 show two examples of how the second packet portions of the three subsequent packets are filled with the AC information of the five datablocks,
figure 19 shows the reproduced AC information of two datablocks,
figure 20 shows an embodiment of the data reduction unit and the formatting unit in the arrangement of figure 1,
figure 21 shows a different format for the packets, and
figure 22 shows a reproduction arrangement.

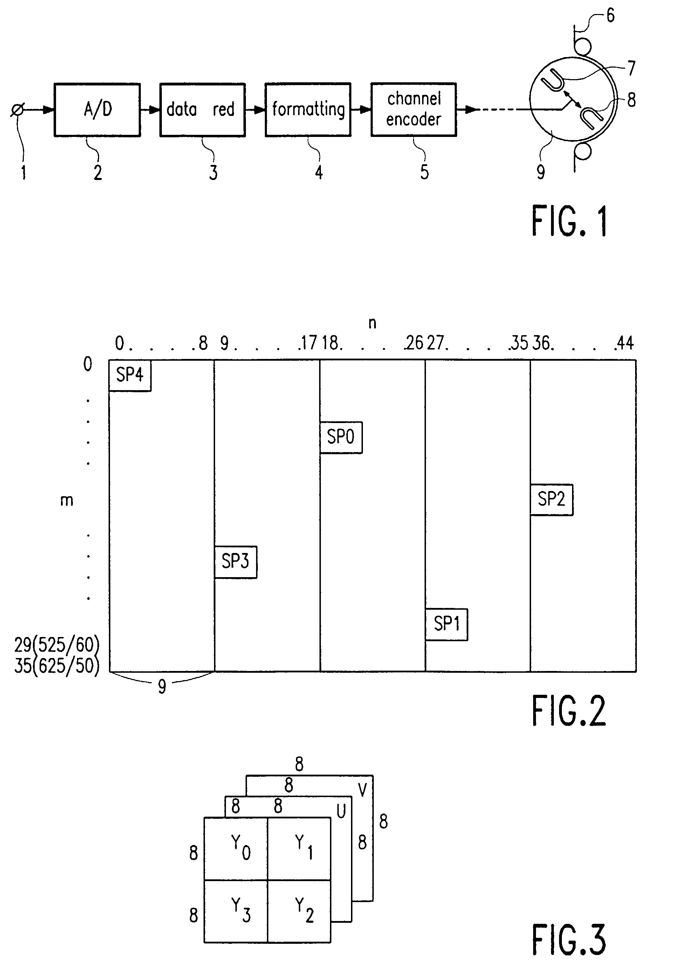

Figure 1 shows in block diagram an embodiment of a helical scan recording arrangement, comprising an input terminal 1 for receiving the video signal, which is applied to an A/D converter for digitizing the videosignal. The digitized video signal is subsequently applied to a data reduction unit 3 in which the digitized video signal is subjected to a DCT encoding, so as to reduce the amount of video information. The data reduced video information is applied to a formatting unit 4, in which the data reduced video information is rearranged so as to store the information in packets. The serial data stream of the packets are subjected to a channel encoding in a channel encoding unit 5, and is subsequently recorded on slant tracks of a longitudinal record carrier 6 by means of recording heads 7 and 8 accommodated on a rotary head drum 9.

Data reduction carried out on the digitized video signal in the data reduction unit 3 is well known in the art. Only a short explanation will be given.

A picture is divided into subpictures of 16x16 pixels. The picture is divided into n subpictures in the horizontal direction and m subpictures in the vertical direction. n can be equal to 45, and m can be equal to 30 (for a 525 lines/60 Hz situation) or 36 (for the 625 lines/50 Hz situation). A number of five subpictures are shown in figure 2, denoted by SP₀ to SP₄. The video information for each subpicture comprises 6 DCT blocks, shown in figure 3, that is: four luminance blocks Y₀ to Y₃ and two chrominance component blocks U and V. The four luminance blocks result from the four 8x8 subpicture areas in the 16x16 subpicture, and the two chrominance component blocks result from the 8x8 pixels equally spaced in the 16x16 subpicture. Data reduction carried out on a subpicture SPₓ results for each of the 6 DCT blocks, in a DC coefficient and a plurality of AC coefficients. A certain number of those AC coefficients are considered most significant AC coefficients and the remaining are least significant AC coefficients. The DC and AC coefficients of the 6 DCT blocks corresponding to a subpicture are combined into a datablock, such that the 6 DC coefficients come first, then come the most significant AC coefficients of the 6 DCT blocks and then come the least significant AC coefficients. The datablock corresponding to a subpicture SPₓ, will be denoted by MBₓ, where x runs from 0 to 4. The datablocks MBₓ are supplied to its output by the data reduction unit 3.

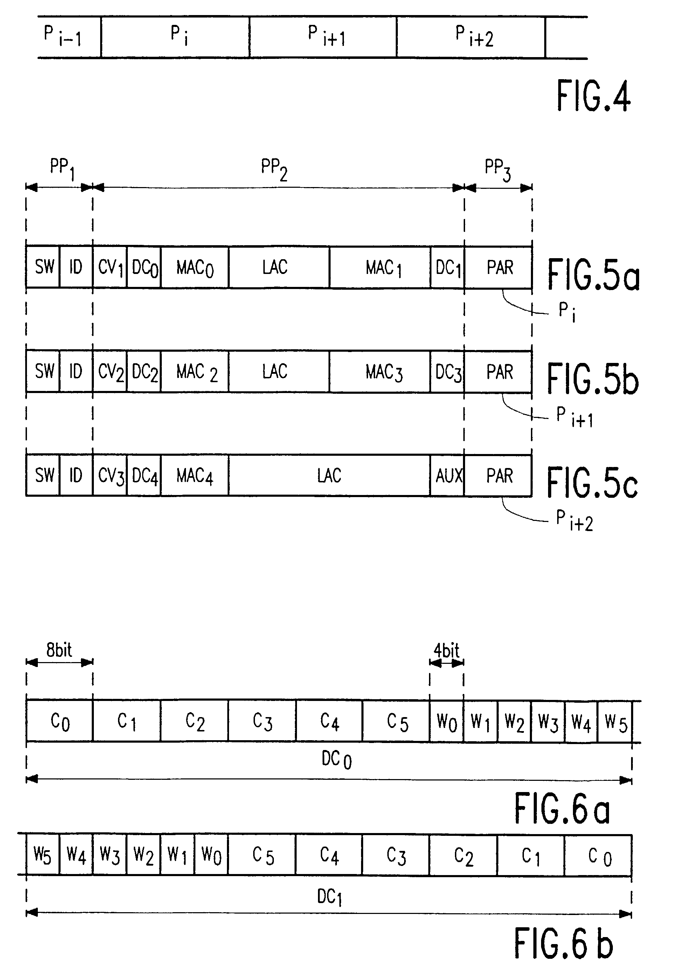

The datablocks are applied to the input of the formatting unit 4. The formatting unit 4 stores the information contained in the datablocks in a serial datastream, which is in the form of a sequence of packets Pᵢ. Figure 4 shows the serial datastream, which is the output signal of the formatting unit 4.

Figure 5 shows in (a) the contents of the packet Pᵢ, in (b) the contents of the packet Pᵢ₊₁ and in (c) the contents of the packet Pᵢ₊₂. The packets each comprise a first packet portion PP₁, a second packet portion PP₂ and a third packet portion PP₃. The first packet portions PP₁ comprise a synchronisation word SW and an identification word ID. The identification word is (indirectly) an indication for the position in the picture of the subpicture(s) which has its (their) video information stored in said packet.

The third packet portion PP₃ of the packets comprise parity information. The second packet portions comprise the data reduced video information contained in the datablocks. More specifically, the second packet portions of three subsequent packets Pᵢ, Pᵢ₊₁ and Pᵢ₊₂ comprise the data reduced video information comprised in the five datablocks MB₀ to MB₄.

As has been said earlier, it should be noted here that the location where the parity information is stored in the packets can be different from the location shown in figure 5. Further, the location where the Auxiliary information and the fifth datablock are stored in the packet Pᵢ₊₂ can be interchanged.

The formatting unit 4 functions as follows in order to store the contents of the five datablocks in the three packets. The DC coefficients of the first datablock MB₀, denoted by DC₀ are stored first in the second packet portion PP₂ of the packet Pᵢ. The DC coefficients of the second datablock MB₁, denoted by DC₁ are stored last in the packet portion PP₂ of the packet Pᵢ. The most significant AC coefficients of the first datablock MB₀, denoted by MAC₀ are stored after the DC coefficients DC₀ in the second packet portion PP₂ of the packet Pᵢ. The most significant AC coefficients of the second datablock MB₁, denoted by MAC₁ are stored before the DC coefficients DC₁ in the packet portion PP₂ of the packet Pᵢ. If there is still memory space available in the packet portion PP₂ between the most significant AC coefficients MAC₀ and MAC₁, this room will be used to store the least significant AC coefficients, denoted LAC of the first and/or second datablock MB₀ and MB₁.

In an equivalent way, the contents of the datablocks MB₂ and MB₃ are stored in the second packet portion PP₂ of the packet Pᵢ₊₁, as is shown in figure 5(b).

The DC coefficients of the fifth datablock MB₄, denoted by DC₄ are stored first in the second packet portion PP₂ of the packet Pᵢ₊₂. The most significant AC coefficients of the fifth datablock MB₄, denoted by MAC₄ are stored after the DC coefficients DC₄ in the second packet portion PP₂ of the packet Pᵢ₊₂. In the case that an auxiliary signal AUX must be stored in the packets as well, this auxiliary signal is stored last in the packet portion PP₂ of the packet Pᵢ₊₂. If there is still memory space available in the packet portion PP₂ between the most significant AC coefficients MAC₄ and the auxiliary signal AUX, this room will be used to store the least significant AC coefficients, denoted LAC of the fifth datablock MB₄.

Further, count values CV₁, CV₂ and CV₃ are stored in the second packet portions PP₂ of the packets Pᵢ, Pᵢ₊₁ and Pᵢ₊₂. The count value CV₁ relates to the amount of storage capacity (number of bytes) needed to store the AC coefficients of the datablocks MB₀ and MB₁. The count value CV₂ relates to the amount of storage capacity needed to store the AC coefficients of the datablocks MB₂ and MB₃. The count value CV₃ relates to the amount of storage capacity needed for storing the AC coefficients of the datablock MB₄.

As an example, the packets Pᵢ can be 141 bytes, of 8 bits each, long. The first packet portion PP₁ can be 5 bytes long, 2 bytes for the sync word SW and 3 bytes for the ID word, and the third packet portion PP₃ can be 8 bytes long. This results in 128 bytes available for the second packet portion PP₂.

The 6 DC coefficients for a datablock can, again as an example, be expressed in 9 bits, requiring at least 7 bytes for storing the DC coefficients in the second packet portion PP₂. As some additional information is stored together with the DC coefficients, the DCₓ information requires 9 bytes. Figure 6a shows how the DC coefficients of the datablock MB₀, and thus also the DC coefficients of the datablocks MB₂ and MB₄ are stored in the second packet portion. First, the 8 most significant bits of the 9-bit DC coefficients for the 6 DCT blocks Y₀ to Y₃, U and V (see figure 3) denoted by c₀ to c5 respectively, are stored. Next follows 4-bit words w₀ to w₅. The word w₀ comprises the ninth bit of the DC coefficient for the first DCT block Y₀, a motion bit (1 bit) which has a relation to the presence or absence of motion between corresponding subpictures of two directly succeeding pictures, and a 2-bit word, needed for the quantizer settings used in an adaptive quantization step. Reference is made in this respect to the publication 'Use of activity classes in adaptive transform image coding' by J.I. Gimlett, IEEE Trans. on Comm., Vol COM-23, no. 7, pp. 785-6.

In the same way, the ninth bit of the DC coefficients, the motion bit and the quantizer settings for the other DCT blocks are stored as 4-bit words w₁ to w₅, as shown in figure 6a.

Figure 6b shows how the 9-bit DC coefficients, the motion bit and the quantizer settings for the DCT blocks in the datablock MB₁ are stored. The DC₁ information is stored in the reverse order in the packet portion PP₂ of the packet Pᵢ, compared to the order in which the DC₀ information is stored in said packet portion. The DC₃ information for the datablock MB₃ is stored in the same way in the packet portion PP₂ of the packet Pᵢ₊₁ as the DC₁ information for datablock MB₁.

It is assumed for the moment that the storage of the AUX information in the (each third) packet Pᵢ₊₂ requires 6 bytes, and that the count values require one byte. This means that, for the storage of the total AC information of the five datablocks, there are 109 bytes available in the packets Pᵢ and Pᵢ₊₁, and 112 bytes available in the packet Pᵢ₊₂.

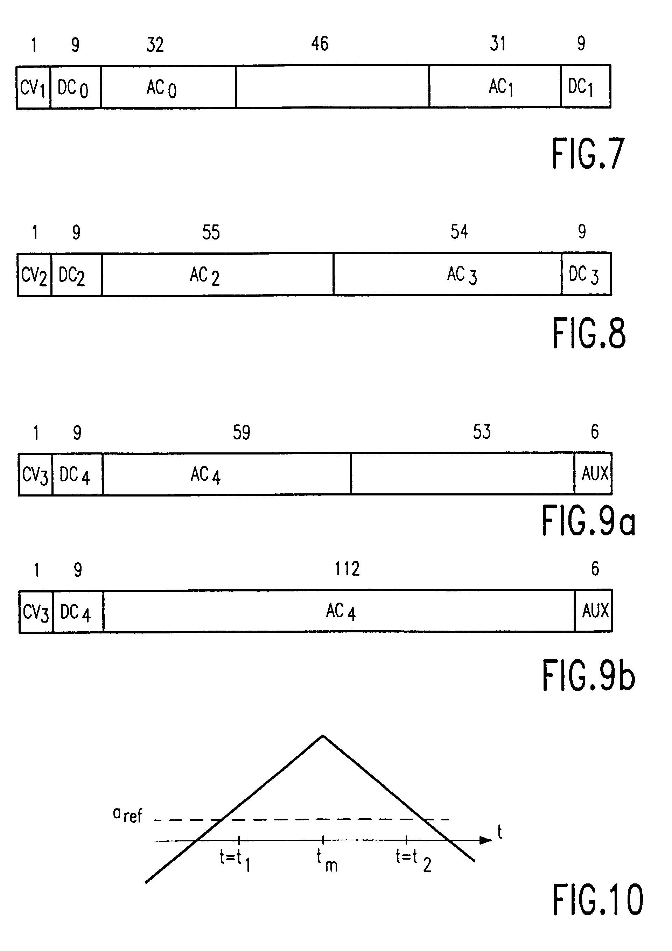

Suppose now, that the count value CV₁ indicates that the AC coefficients of the datablocks MB₀ and MB₁ require only 63 bytes for storage, that is: CV₁ =63. Figure 7 now shows how the AC coefficients of the datablocks MB₀ and MB₁ are stored in the second packet portion PP₂ of the packet Pᵢ. The most significant AC coefficients in the datablock MB₀ are stored first after the DC coefficients DC₀ in the space denoted by AC₀ in figure 7. The most significant AC coefficients of the datablock MB₁ are stored last in the space denoted by AC₁, before the DC coefficients DC₁. The least significant AC coefficients of the datablocks MB₀ and MB₁ are stored in the space in the packet portion formed between the most significant AC coefficients of the datablock MB₀ and the most significant AC coefficients of the datablock MB₁, so as to fill the spaces denoted AC₀ and AC₁. The spaces AC₀ and AC₁ have a length equal to CV₁/2, if CV₁ is even, whilst the lengths of AC₀ and AC₁ equal (CV₁+1)/2 and (CV₁-1)/2 respectively, if CV₁ is odd. It should thus be noted that, if the amount of AC information in the datablock MB₀ is larger (less) than the amount of AC information in the datablock MB₁, least significant AC coefficients in the datablock MB₀ (MB₁) are stored in the space AC₁ (AC₀). As can be seen in figure 7, an empty space of 46 bytes remains in the packet portion PP₂.

Figure 8 shows how the AC coefficients of the datablocks MB₂ and MB₃ are stored in the second packet portion PP₂ of the packet Pᵢ₊₁. The count value CV₂ is assumed to be equal to 145, and thus larger than 109. The most significant AC coefficients in the datablock MB₂ are stored first after the DC coefficients DC₂ in the space denoted by AC₂ in figure 8. The most significant AC coefficients of the datablock MB₃ are stored last in the space denoted by AC₃, before the DC coefficients DC₃. The least significant AC coefficients of the datablocks MB₂ and MB₃ are stored in the space in the packet portion formed between the most significant AC coefficients of the datablock MB₂ and the most significant AC coefficients of the datablock MB₃, so as to fill the spaces denoted AC₂ and AC₃. The spaces AC₂ and AC₃ have a length equal to 55 and 54 bytes respectively. A surplus of AC information in the datablocks MB₂ and MB₃, which is equal to 36 (=145-109) bytes, can not be stored in the spaces AC₂ and AC₃ of the second packet portion PP₂ of the packet Pᵢ₊₁. This surplus can be stored in the empty space of 46 bytes still available in the packet Pᵢ, see figure 7.

The maximum value for the 8-bit word CVᵢ, which is the value 255, is reserved for the situation where the number of bytes needed to store the AC coefficients of the (2i-1)-th and (2i)-th datablock is larger than or equal to 255. In this situation the other two CV-values will be smaller than 109. Although the exact value for CVᵢ in this situation is not known, it is possible to extract the information belonging to each datablock from the three packets.

Figure 9 shows how the AC coefficients of the datablock MB₄ are stored in the second packet portion PP₂ of the packet Pᵢ₊₂. The count value CV₃ is assumed to be equal to 59 in figure 9a, and equal to 129 in figure 9b. The most significant AC coefficients in the datablock MB₄ are stored first after the DC coefficients DC₄ in the space denoted by AC₄ in figure 9a and b. The least significant AC coefficients of the datablock MB₄ are stored next in the space AC₄. In the situation of figure 9a, an empty space of 53 bytes remains, in which the surplus of AC information from one or both of the other packets Pᵢ and Pᵢ₊₁ can be stored. In the situation of figure 9b, 112 bytes of the AC information in the datablock MB₄ can be stored in the second packet portion of the packet Pᵢ₊₂. The surplus of AC information, in total 16 (129-112) bytes can be stored in the empty spaces (if present) in the packets Pᵢ and Pᵢ₊₁.

Storing the data reduced information in the packets in the way described has the following advantage, when reproducing the information during a feature mode, that is: with the record carrier transport speed being different from nominal. If a reproduction head crosses a track, the envelope of the signal read by the head increases to a maximum at a time instant tₘ when the head is located precisely on the track. When leaving the track, the envelope decreases. This is schematically shown in figure 10, where the amplitude of the envelope signal is shown as a function of time. A reliable detection of the signal recorded from the signal reproduced by the head, is possible if the amplitude of the envelope is above a predetermined reference amplitude a_{ref}.

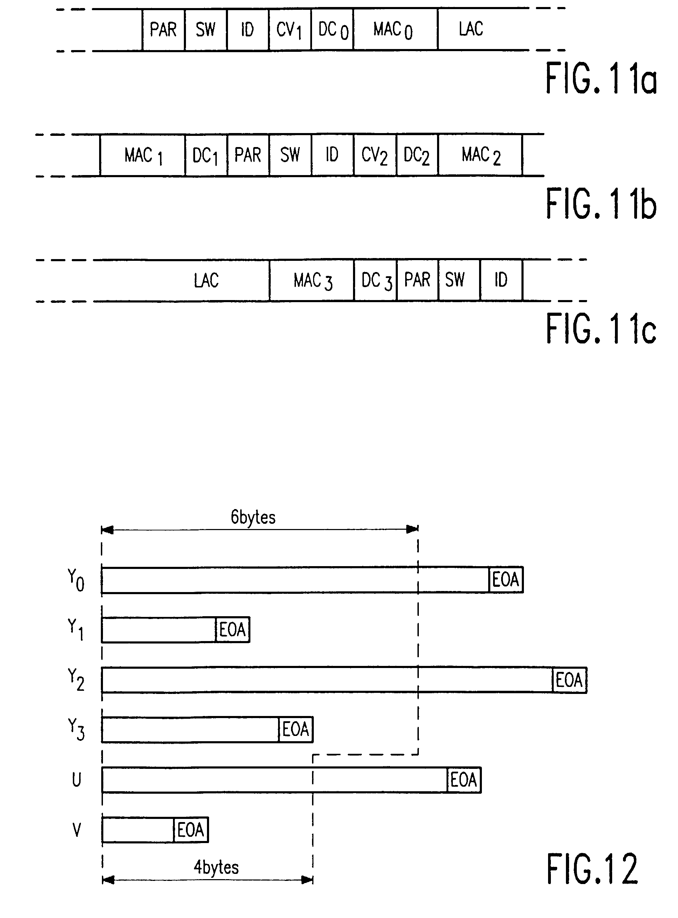

Three situations will now be described, namely a first one where a sync word is located at the time instant t₁, a second one where the sync word is located at the time instant tₘ, and a third one where the sync word is located at the time instant t₂. In the first situation, further explained using figure 11a, the reproducing arrangement reproduces the start portion of a packet, including the sync word, the ID word, the DC coefficients and the most significant AC coefficients of the datablock recorded in that packet. Figure 11a shows how the most significant information, which is the DC coefficients and the most significant AC coefficients, of the first datablock MB₀ is detected in this way. Decoding of the data reduced video information of the subpicture corresponding to the first datablock, based on the DC coefficients and the most significant AC coefficients is possible, in order to obtain a subpicture of a reduced quality. By means of the ID word also reproduced, it is possible to position the subpicture at its correct location in the picture.

In the second situation, further explained using figure 11b, the reproducing arrangement reproduces the final portion of a packet and the start portion of the next packet. That means that the DC coefficients and the most significant AC coefficients of a certain datablock (MB₁), the sync word, the ID word, and the DC coefficients and most significant AC coefficients of another datablock (MB₂) are reproduced. Decoding of the data reduced video information of the subpictures corresponding to the datablocks MB₁ and MB₂, based on the DC coefficients and the most significant AC coefficients of those datablocks, is now possible in order to obtain two subpictures having a reduced quality. By means of the ID word also reproduced, it is possible to position the two subpictures at their correct locations in the picture.

In the third situation, further explained using figure 11c, the reproducing arrangement reproduces the final portion of a packet, including the DC coefficients and the most significant AC coefficients of the datablock recorded in that packet and the sync word and the ID word in the next packet. Figure 11c shows how the most significant information, which is the DC coefficients and the most significant AC coefficients, of the fourth datablock MB₃ is detected in this way. Decoding of the data reduced video information of the subpicture corresponding to the fourth datablock, based on the DC coefficients and the most significant AC coefficients is possible, in order to obtain a subpicture having a reduced quality. By means of the ID word also reproduced, it is possible to position the subpicture at its correct location in the picture.

As a result high non-nominal transport speeds are possible in a feature mode, whilst reproduction and decoding of the reproduced information still results in pictures of sufficient quality for recognition.

A further explanation will be given of the storage of the AC coefficients of the various datablocks in the AC areas given in figure 7, 8 and 9.

First, the storage of the AC coefficients in datablock MB₀ will be described. As shown in figure 7, 32 bytes of memory space is available in the space AC₀ for the storage of the AC coefficients of the datablock MB₀, and 31 bytes of memory space is available in the space AC₁ for the storage of the AC coefficients of the datablock MB₁. The memory space corresponding to the 32 bytes in the AC₀ space and the 31 bytes in the AC₁ space is distributed over the six DCT blocks as follows:

| DCT block | MB₀ | MB₁ |
|---|---|---|
| Y₀ | 6 bytes | 6 bytes |
| Y₁ | 6 bytes | 6 bytes |
| Y₂ | 6 bytes | 6 bytes |
| Y₃ | 6 bytes | 6 bytes |
| U | 4 bytes | 4 bytes |
| V | 4 bytes | 3 bytes |

The division over the various DCT blocks is done in accordance with the following rule. For the Y-DCT blocks: divide the available number of bytes (32 or 31) by 5. The integer value of the division result is the reserved number of bytes for each of the Y-DCT blocks. Divide the available number of bytes (32 or 31) by 10. The integer value of the division result is the reserved number of bytes for the U- and V-DCT blocks. If there is a remainder, then first the U- and V-DCT blocks get one byte more, and then the Y-DCT blocks.

Figure 12 shows the AC information for the datablock MB₀. The top array schematically shows the serial sequence of the AC coefficients obtained from DCT coding the Y₀-DCT block. The second array shows the serial sequence of the AC coefficients obtained from DCT coding the Y₁-DCT block, and so on. The figure shows all the AC coefficients serially after each other, the most significant one first, then the most significant but one, and so on, until the least significant one is stored last in the array, followed by an EOA (end of array) word. No boundaries between the coefficients serially sequenced are shown, for the reason that a variable length coding has been carried out in the DCT coding step, so as to obtain coefficients of variable lengths.

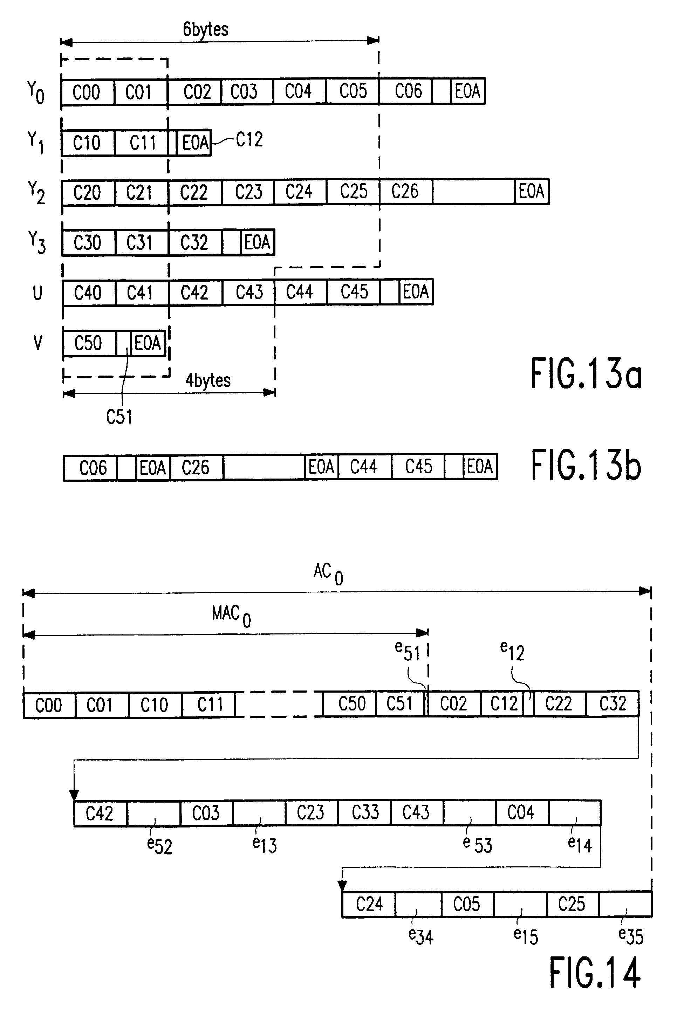

The storage of the AC information in the space AC₀ is shown with reference to figure 13 and 14, figure 13a showing the same arrays as figure 12, the arrays now being divided into bytes of 8 bits each, and figure 14 showing in serial form the memory space of 109 bytes, being that part of the second packet portion between the DC coefficients, that is the AC₀ and AC₁ area and the empty area between the AC₀ and AC₁ area in figure 7.

It should be noted that the surplus bytes in the various Y-arrays (that are the total number of bytes in each array minus the first six bytes, in this example), and the surplus bytes in the U- and V-arrays (that are the total number of bytes in the U-and V-arrays, minus the first four bytes, in this example) are temporarily stored serially in a surplus memory, shown in figure 13b. First, the surplus bytes of the Y-DCT arrays, and thereafter the surplus bytes of the U- and V arrays are stored in the surplus memory.

Figure 14 shows the memory AC₀ in which the bytes are stored. First two bytes c₀₀ and c₀₁ in the Y₀-array, see figure 13, are stored in the AC₀ area, next the first two bytes c₁₀ and c₁₁ in the Y₁-array are stored in the AC₀ area, next the first two bytes c₂₀ and c₂₁ in the Y₂-array are stored. This continues until the first two bytes c₅₀ and c₅₁ in the V-array are stored in the AC₀ area. The reason for storing the first two bytes of each array together, is that the AC coefficients can be 16-bit long at maximum, so that at least one most significant AC coefficient of each DCT block is stored as closely as possible behind the DC coefficients of the DCT blocks. The information contained in the 6 times 2 bytes recorded firstly in the AC₀ area can be considered as the most significant AC information stored in the MAC₀ area in figure 5a. It should be noted that the memory location in which the byte c₅₁ is stored is partly empty, because the byte c₅₁ is less than 8 bits long, as shown in figure 13a. The empty location in the memory AC₀ is indicated by e₅₁.

The storage of the AC information in the AC₀ area is continued by storing the following bytes after each other: c₀₂, c₁₂, c₂₂, c₃₂, c₄₂, see also figure 14. The byte c₁₂ is also less than 8 bits long, so that an empty location e₁₂ is present in the memory AC₀. As there is no c₅₂ byte in the V-array, see figure 13, an empty location e₅₂ of one byte long is created in the area AC₀. Next, the byte c₀₃ is stored, followed by an empty location e₁₃ of one byte long. The byte c₂₃ is stored thereafter, followed by the bytes c₃₃ and c₄₃. An empty byte e₅₃ follows. Next the byte c₀₄ is stored, followed by an empty byte e₁₄. The byte c₂₄ is stored next, followed by empty byte e₃₄, byte c₀₅, empty byte e₁₅, byte c₂₅ and empty byte e₃₅. The empty byte e₃₅ forms the termination of the AC₀ memory space in the second packet portion of figure 7.

Next, the data stored in the surplus memory of figure 13b, are stored serially in the empty locations in the memory AC₀ of figure 13a.

The first byte, which is the byte c₆₀ is now stored in the empty locations in the AC₀ memory space, that is partly in the locations e₅₁, e₁₂ and e₅₂. The next bytes in the surplus memory of figure 13b, starting with the byte c₀₇, are stored in the empty locations.

Two situations can occur. In a first situation, the storage of all the bytes of the coefficients shown in figure 13 can be stored within the memory space AC₀. In a second situation, the memory space AC₀ is too small to store all the bytes of figure 13. In the second situation, the remaining surplus of bytes need to be stored somewhere else. That will be in the remaining empty space in the memory space AC₁, as the total memory capacity of the AC₀ and AC₁ memory areas suffices for storing all the AC information of the datablocks MB₀ and MB₁.

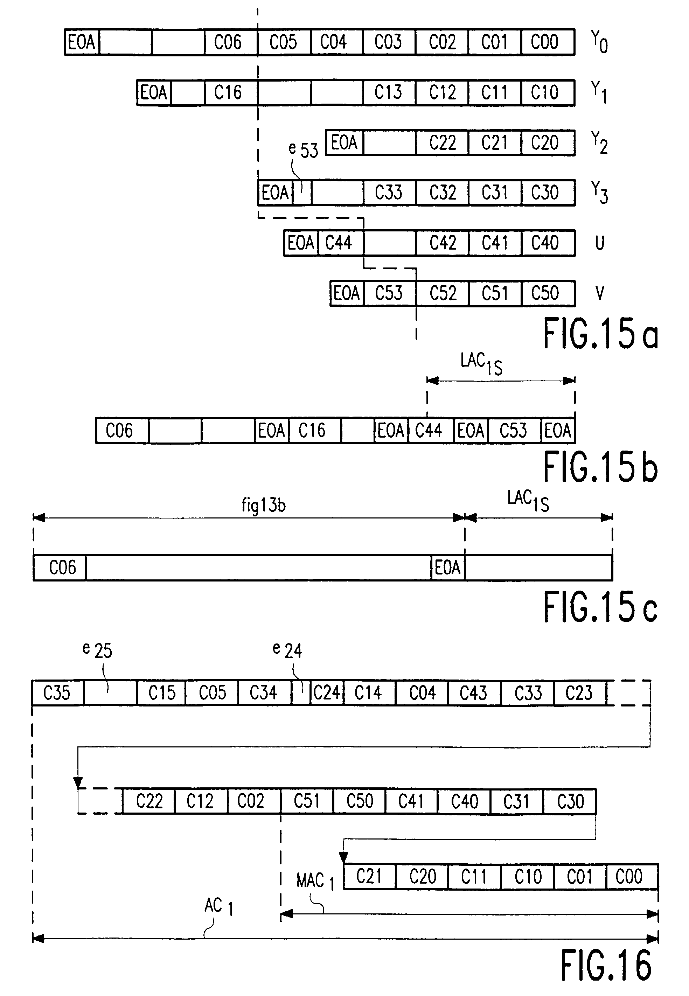

Figure 15a shows all the AC information for the datablock MB₁. The AC coefficients for the various DCT blocks have been shown in reverse order, for clarity reasons, as they are stored in reverse order, compared to the AC coefficients of the datablock MB₀, in the memory space AC₁. Figure 16 shows how the bytes are stored in the memory space AC₁, namely from the right to the left.

First, the surplus bytes in the Y-DCT blocks (that are the total number of bytes in each Y-array minus the first six bytes, in this example) are serially stored in a surplus memory, see figure 15b. Also the surplus bytes in the U-DCT block (that are the total number of bytes in the U-array, minus the first four bytes, in this example), and the surplus bytes in the V-DCT block (that are the total number of bytes in the V-array, minus the first three bytes, in this example) are stored in the surplus memory.

The storage of the bytes in the memory AC₁ as given in figure 16 is as follows. First two bytes c₀₀ and c₀₁ in the Y₀-array, see figure 15, are stored in the AC₁ area, next the first two bytes c₁₀ and c₁₁ in the Y₁-array are stored in the AC₁ area, next the first two bytes c₂₀ and c₂₁ in the Y₂-array are stored. This continues until the first two bytes c₅₀ and c₅₁ in the V-array are stored in the AC₁ area. In this way, at least one most significant AC coefficient of each DCT block is stored as closely as possible before the corresponding DC coefficients of the DCT blocks. The information contained in the 6 times 2 bytes recorded in the right end of the AC₁ area can be considered as the most significant AC information stored in the MAC₁ area in figure 5a.

The storage of the AC information in the AC₁ area is continued by storing the following bytes after each other: c₀₂, c₁₂, c₂₂, c₃₂, c₄₂, see also figure 16. This is continued until the byte c₃₅ is stored in the most left byte location of the memory space AC₁. As the byte c₂₄ is less than 8 bit long, an empty space e₂₄ is present. Further, there is no c₂₅ byte in the Y₃-array, see figure 15, so that an empty location e₂₅ of one byte long is present in the area AC₁. The byte c₃₅ forms the termination of the AC₁ memory space in the second packet portion of figure 7.

Next, the information stored in the surplus memory of figure 15b, starting with the byte c₀₆, is stored in the empty locations of the AC₁ area.

Now the situation occurs that the memory space AC₁ can not store all the remaining bytes stored in the surplus memory of figure 15b. That means that the surplus of bytes, as an example indicated by LAC₁ₛ in figure 15b, must be stored else, namely in the remaining empty space in the memory space AC₀. To that purpose, the surplus information LAC₁ₛ is added to the data stored in the surplus memory for the datablock MB₀. This is shown in figure 15c, where the first part, indicated by 'fig. 13b' is the information stored in the surplus memory, as also shown in figure 13b, which is followed by the surplus information LAC₁ₛ. The total information shown in figure 15c is thus stored in the empty spaces present in the AC₀ area, that is: within the first 32 bytes in the second packet portion of the packet P₁ in figure 7.

The remaining empty space of 46 bytes in the second packet portion of the packet in figure 7 can be used for storage of the surplus bytes in the AC information of the other datablocks MB₂, MB₃ and MB₄.

Now, it is assumed that the count value CV₁ equals 141, the count value CV₂ equals 85 and the count value CV₃ equals 98. Further, it is assumed that the AC information of the MB₁ datablock is larger than the AC information of the MB₀ datablock, and that the AC information of the MB₃ datablock is larger than the MB₂ datablock.

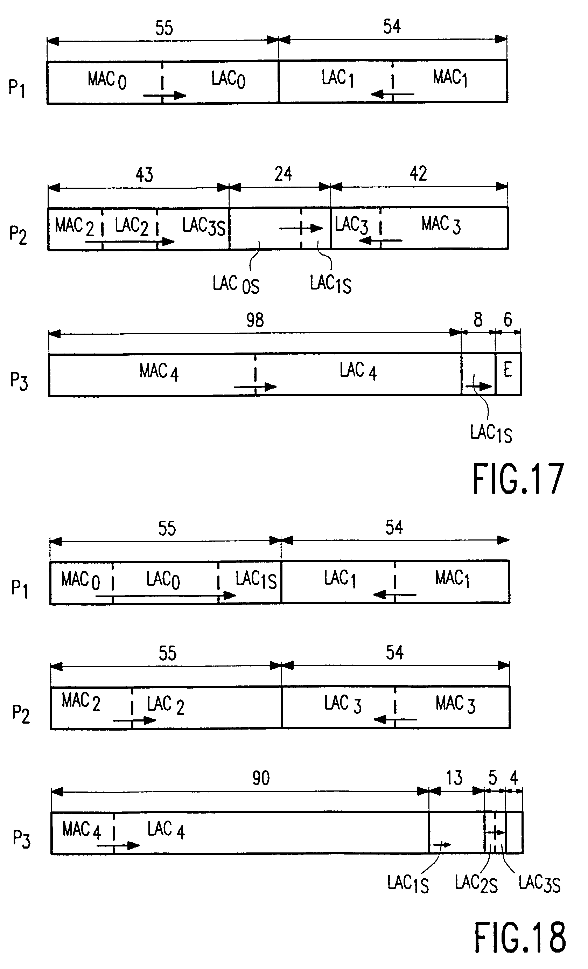

Figure 17 shows that 55 bytes of AC information, indicated by MAC₀, of the datablock MB₀, and that 54 bytes of AC information, indicated by MAC₁, of the datablock MB₁ is stored in the second packet portion of the packet P₁. The total AC information of the datablock MB₂, denoted by MAC₂ and LAC₂, is stored within the 43 first bytes of the second packet portion of the packet P₂. Further, 42 bytes of the AC information of the datablock MB₃, indicated by MAC₃ and LAC₃, are stored at the end of the second packet portion of the packet P₂. The surplus of AC information of the datablock MB₃ over the 42 bytes already stored, is now stored in the empty locations in the first 43 bytes of the second packet portion of the packet P₂. This is denoted by LAC₃ₛ in figure 17. Next, the 24 byte large empty space in the packet P₂ is now filled with the surplus of AC information of the datablock MB₀ first, and if there is still empty space available, with surplus of AC information of datablock MB₁. This is denoted by LAC₀ₛ and LAC₁ₛ respectively. The total AC information of the datablock MB₄, denoted by MAC₄ and LAC₄, is stored within the 98 first bytes of the second packet portion of the packet P₃. The remaining space of 13 bytes is used to store the remaining 8 bytes of the surplus of the AC information of the datablock MB₁, indicated by LAC₁ₛ.

The arrows in the memory spaces indicate the direction in which the AC information in the various datablocks is stored in the spaces. More specifically, the surplus of AC information of a datablock that is stored in another packet is always stored from left to right in a packet, as is shown with reference to the LACₒₛ and LAC₁ₛ information in the second and third packet P₂ and P₃. Further, it appears that an empty space E of six bytes remains in the third packet P₃.

A second example is given in relation to figure 18. It is assumed that the count value CV₁ equals 122, the count value CV₂ equals 114 and the count value CV₃ equals 90. Further, it is assumed that the AC information of the MB₀ datablock is smaller than 55 bytes, and that the AC information of the MB₂ datablock is larger than 55 bytes, and that datablock MB₃ is larger than 54 bytes.

Figure 18 shows that the total AC information of the datablock MB₀, indicated by MAC₀ and LAC₀, is stored within the first 55 bytes of the second packet portion of the packet P₁. Further, 54 bytes of AC information, indicated by MAC₁ and LAC₁, of the datablock MB₁ is stored in the last 54 bytes of the second packet portion of the packet P₁. Part of the surplus AC information, denoted LAC₁ₛ, of the datablock MB₁ is stored in the empty positions within the first 55 bytes of the second packet portion of the packet P₁. 55 bytes of the AC information of the datablock MB₂ is stored first in the areas denoted MAC₂ and LAC₂ in the second packet portion of the packet P₂. Further, 54 bytes of the AC information of the datablock MB₃, indicated by MAC₃ and LAC₃, are stored at the end of the second packet portion of the packet P₂. The total AC information of the datablock MB₄, denoted by MAC₄ and LAC₄, is stored within the first 90 bytes of the second packet portion of the packet P₃. The remaining space of 22 bytes can be used to store the remaining 13 bytes of the surplus of the AC information of the datablocks MB₁, denoted by LAC₁ₛ and the remaining 5 bytes of the surplus of the AC information of the datablocks MB₂ and MB₃, denoted by LAC₂ₛ and LAC₃ₛ. An empty space of 4 bytes remains.

Next a description will be given of the retrieval of the data reduced video information from the three packets. Upon reproduction during nominal speed, all information from the three packets are read. The three count values CV₁, CV₂ and CV₃ can thus be retrieved from the three packets, so that the reproducing arrangement knows how many bytes of AC information are included in the five datablocks MB₀ to MB₄ stored in the three subsequent packets.

In a situation where a count value, such as CV₁, is smaller than 109, the reproducing arrangement knows that the AC information of two datablocks (in the example: the datablocks MB₀ and MB₁) is completely stored in the said packet (and that the AC₀ and AC₁ areas -memories- have the same amount of storage space CV₁/2, if CV₁ is even, or (CV₁+1)/2 and (CV₁-1)/2 respectively, if CV₁ is odd).

Retrieving the AC information, such as the AC information shown in figure 13a from the AC₀ area shown in figure 14 is as follows. First the two bytes c₀₀ and c₀₁ of the Y₀-DCT block are taken, next the two bytes c₁₀ and c₁₁ of the Y₁-DCT block. This continues until all the first two bytes of the five DCT blocks are read from the AC₀ area. The reproducing arrangement has detected the end-of-array word EOA in the byte c₅₁, so that it knows that no further AC information for the V-DCT block is available. Further, the information stored in the e₅₁ location is stored in a temporary memory. Next, the bytes c₀₂, c₁₂, c₂₂, c₃₂, c₄₂ are retrieved in this order. Upon retrieving the c₁₂ byte, the reproducing arrangement has again detected an EOA-word, so that it knows that no further bytes are needed for the Y₁-DCT block. The information stored in the e₁₂ location is stored in the surplus memory after the e₅₁ information.

The next byte, stored in the location e₅₂ is stored in the surplus memory. The next byte is retrieved as the byte c₀₃. The byte stored in the location e₁₃ is stored in the surplus memory directly after the byte e₅₂. Next, the bytes c₂₃, c₃₃ and c₄₃ are retrieved. Upon retrieval of the byte c₃₃, the reproducing arrangement has detected the EOA-word, so that no further bytes are needed for the Y₃-DCT block. The byte stored in the e₅₃ location is again stored in the surplus memory. The byte c₀₄ is retrieved. The byte in the location e₁₄ is stored in the surplus memory. This is continued until all the bytes are retried from the AC₀ area, and are either allocated to a certain DCT block, or stored in the surplus memory.

Now, the bytes in the surplus memory are exactly the bytes stored in the surplus memory as described previously with reference to figure 13b. Those bytes can now be allocated to the DCT blocks. The first byte is the byte c₀₆ and thus applied to the Y₀-DCT block. Bytes are applied to the Y₀ DCT block until the first EOA word in the surplus memory is detected. Next bytes are allocated to the Y₂-DCT block until the next EOA word is detected. In this way, all the bytes stored in the surplus memory are allocated to a certain DCT block. As a result, all AC information is retrieved from the second packet portion, so that, in combination with the DC information, also retrieved from the packet portion, the inverse DCT transformation (a data expansion) can be carried out, so as to obtain the replica of the original subpicture.

Next, the situation will be described, such as shown in figure 17, where a count values CV₁, CV₂ and CV₃ equal 141, 85 and 98 respectively. The retrieval of the data for the datablock MB₄ is in accordance with the description given above, and needs no further explanation. The subpicture corresponding to the datablock MB₄ can thus be regenerated.

The reproduction of the information for the datablock MB₂ as stored in the packet P₂ is in fact also the same as described above, as all the AC information of the datablock MB₂ is included in the first 43 bytes of the second packet portion of the packet P₂. The reproduction of the datablock MB₃ is carried out in an inverse way, compared to the recording of the MB₁ datablock described with reference to figure 15 and 16.

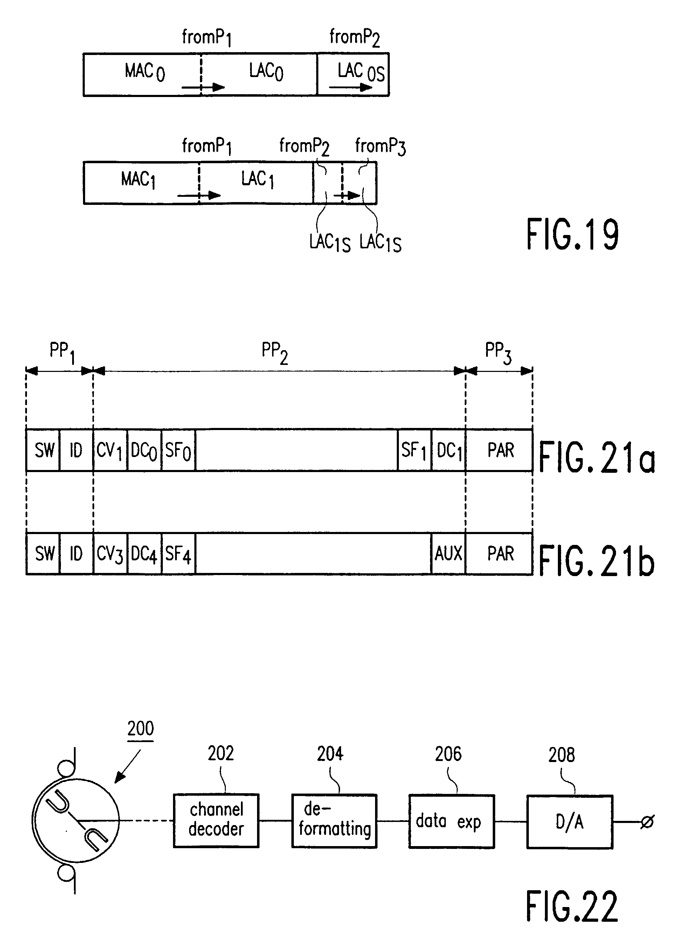

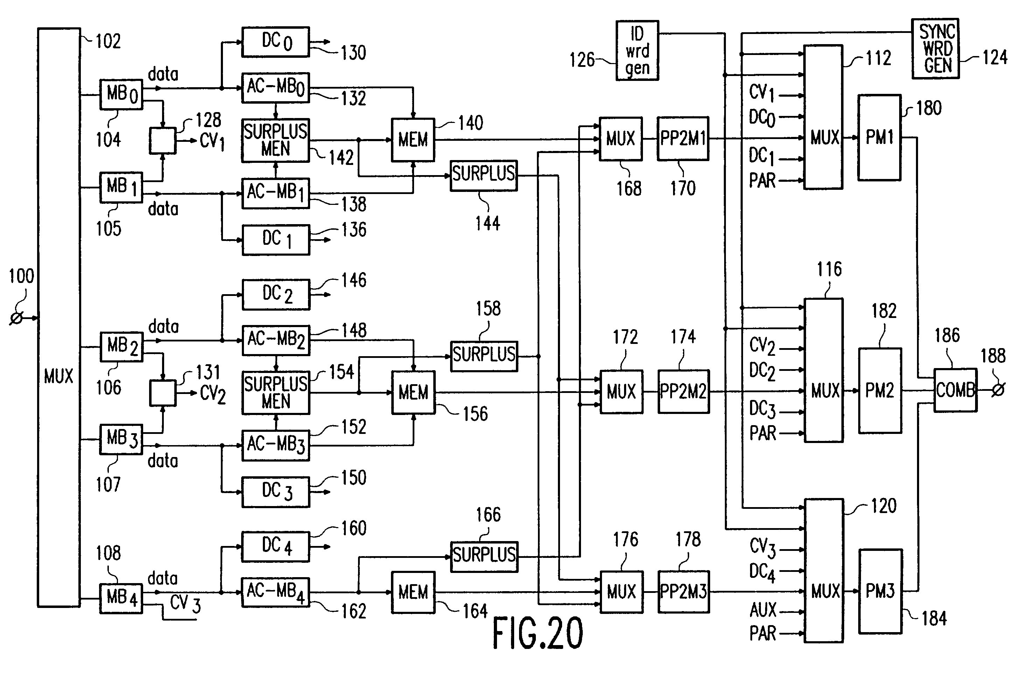

Figure 19 shows that the MAC₀ and LAC₀ information of the datablock MB₀ is retrieved from the first 55 bytes in the second packet portion of the packet P₁ in figure 17. In the same way, the MAC₁ and the LAC₁ information of the datablock MB₁, included in the remaining 54 bytes of that second packet portion, are retrieved. Next, the LAC₀ₛ information stored in the packet P₂ is retrieved and added to the MAC and LAC information of the datablock MB₀, which enables the reproduction arrangement to regenerate the subpicture corresponding to the datablock MB₀. Next, the LAC₁ₛ information stored in the packets P₂ and P₃ are retrieved, so as to enable the regeneration of the subpicture corresponding to the datablock MB₁.

Figure 20 shows an embodiment of the data reduction unit 3 and the formatting unit 4 in the arrangement of figure 1. An input 100 for receiving the digital video signal is coupled to the input of a multiplexer 102. The digital video signal is divided into subpictures by the multiplexer 102, such that the video information corresponding to subpicture SP₀ is supplied to a DCT encoder 104, that the video information corresponding to subpicture SP₁ is supplied to a DCT encoder 105, that the video information corresponding to subpicture SP₂ is supplied to a DCT encoder 106, that the video information corresponding to subpicture SP₃ is supplied to a DCT encoder 107, and that the video information corresponding to subpicture SP₄ is supplied to a DCT encoder 108. The DCT encoders 104 and 105 carry out a data reduction step on the video information applied to their inputs and supply data reduced video information to inputs 110 and 111 respectively of a circuit block 112. The DCT encoders 106 and 107 carry out a data reduction step on the video information applied to their inputs and supply data reduced video information to inputs 114 and 115 respectively of a circuit block 116. The DCT encoder 108 carries out a data reduction step on the video information applied to its input and supply data reduced video information to an input 118 of a circuit block 120. Further, an auxiliary signal generator 122 is provided which supplies auxiliary data to an input 119 of the circuit block 120.

A sync word generator 124 and an ID word generator 126 are provided for supplying sync words and ID words to the multiplexer circuits 112, 116 and 120. A count value generator 128 is present for generating the count value CV₁ from the data reduced information supplied by the DCT encoders 104 and 105. This count value is applied to the multiplexer circuit 112. A count value generator 131 is present for generating the count value CV₂ from the data reduced information supplied by the DCT encoders 106 and 107. This count value is applied to the multiplexer circuit 116. A count value CV₃ is generated by the DCT encoder 108 and is applied to the multiplexer circuit 120. The count values have the meaning specified above.

The data output of the DCT encoder 104 supplies the DC information and the AC information contained in the datablock MB₀. The DC information, that is: the nine bytes of information DC₀, see figure 6a, is extracted from the output signal of the encoder 104 and stored in a memory 130. The AC information, shown in figure 12, is stored in a memory 132. In the same way, the data output of the DCT encoder 105 supplies the DC information and the AC information contained in the datablock MB₁. The DC information, that is: the nine bytes of information DC₁, see figure 6b, is extracted from the output signal of the encoder 105 and stored in a memory 136. The AC information, shown in figure 15a, is stored in a memory 138. There is provided a memory 140, a surplus memory 142 and a surplus memory 144.

The data output of the DCT encoder 106 supplies the DC information and the AC information contained in the datablock MB₂. The DC information, that is: the nine bytes of information DC₂, see figure 6a, is extracted from the output signal of the encoder 106 and stored in a memory 146. The AC information of the datablock MB₂ is stored in a memory 148. In the same way, the data output of the DCT encoder 107 supplies the DC information and the AC information contained in the datablock MB₃. The DC information, that is: the nine bytes of information DC₃, see figure 6b, is extracted from the output signal of the encoder 107 and stored in a memory 150. The AC information contained in the datablock MB₃ is stored in a memory 152. There is provided a memory 156, a surplus memory 154 and a surplus memory 158.

The data output of the DCT encoder 108 supplies the DC information and the AC information contained in the datablock MB₄. The DC information, that is: the nine bytes of information DC₄ is extracted from the output signal of the encoder 108 and stored in a memory 160. The AC information of the datablock MB₄ is stored in a memory 162. There is further provided a memory 164 and a surplus memory 166.

The memories 140, 142 and 144 are adapted to store the AC information of the datablocks MB₀ and MB₁, in the way as described previously with reference to the figures 12 to 16. In that example, it was assumed that CV₁ was equal to 63. That meant that all the AC information of the datablocks MB₀ and MB₁ can be stored in the second packet portion of one packet. In this situation, the memory 140 is taken 63 bytes large. When storing the AC information of the datablock MB₀ in the memory 140, the array of bytes shown in figure 14 is stored in the first 32 byte locations of this memory, and the bytes shown in figure 13b are stored in the surplus memory 142. Next, the bytes of information shown in figure 13b are stored in the empty locations in the first 32 bytes in the memory 140. In the same way, the bytes shown in figure 16 are stored in the remaining 31 bytes of the memory 140, and the bytes of information shown in figure 15b are stored in the surplus memory 142. Next, the bytes in figure 15b, starting with the byte c₀₆ are stored in the empty locations in the remaining 31 bytes of the memory 140, until all the empty locations in the remaining 31 bytes are filled. A number of bytes, indicated by LAC₁ₛ in figure 15b, remain in the surplus memory 142. Those bytes are stored in the still remaining empty locations in the first 32 bytes of the memory 140.

In the situation of figure 17, CV₁ is equal to 141, and the AC information for both datablocks MB₀ and MB₁ appeared to be larger than 55 bytes. Therefore, it is not possible to store all the AC information of both datablocks in the second packet portion of the first packet alone. The memory 140 is now taken 109 bytes large. The memory 140 is now filled in the way described above. The surplus of AC information of the datablocks MB₀ and MB₁, in total 32 bytes, which was stored in the surplus memory 142, but can not be stored in the memory 140, is now stored in the surplus memory 144.

As CV₂ equals 85, see the example of figure 17, the memory 156 is taken 85 bytes large. Moreover, the AC information of datablock MB₂ is smaller than 43 bytes, whilst the AC information of the datablock MB₃ was larger than 42 bytes. The AC information of the datablock MB₂ is stored in the first 43 byte locations of the memory 156. Further, 42 bytes of the AC information of the datablock MB₃ is stored in the remaining 42 bytes of the memory 156. The AC information of the datablock MB₃ over 42 bytes is stored in the surplus memory 154 and stored thereafter in the remaining empty locations in the first 43 bytes of the memory 156. The surplus memory 158 will thus remain empty.

As CV₃ equals 98, the memory 164 is taken equal to 98 bytes large. All AC information of the datablock MB₄ can be stored in the memory 164, and the surplus memory 166 remains empty.

It speaks for itself that the surplus memories 142 and 144 can be combined into one surplus memory. In the same way, the surplus memories 154 and 156 can be combined into one surplus memory.

Outputs of the memories 140, 158 and 166 are applied to corresponding inputs of a multiplexer 168, which has an output coupled to an input of a memory 170 for storing the information included in the second packet portion of the first packet P₁. Outputs of the memories 144, 156 and 166 are applied to corresponding inputs of a multiplexer 172, which has an output coupled to an input of a memory 174 for storing the information included in the second packet portion of the second packet P₂. Outputs of the memories 144, 158 and 164 are applied to corresponding inputs of a multiplexer 176, which has an output coupled to an input of a memory 178 for storing the information included in the second packet portion of the third packet P₃. The respective memories 170, 174 and 178 are 109, 109 and 112 bytes large.

Storing the AC information of the five datablocks MB₀ to MB₄ into the memories 170, 174 and 178 is carried out as follows. Again, we go out from the situation described in figure 17. As the memory 140 is 109 bytes large and is completely filled with AC information of the datablocks, the multiplexer 168 multiplexes the output of the memory 140 to the input of the memory 170, so that the contents of the memory 140 is loaded in the memory 170.

The memory 156 is 85 bytes large. The multiplexer 172 now multiplexes the output of the memory 156 to the input of the memory 116, so that the first 43 bytes of information stored in the memory 156 can be stored in the memory 174. Next, the multiplexer 172 multiplexes the output of the memory 144 to the input of the memory 174, so that the first 24 bytes of the surplus information stored in the memory 144 can be stored in the next 24 bytes of the memory 174. The multiplexer 172 now multiplexes the output of the memory 156 to the input of the memory 174, so that the last 42 bytes of information stored in the memory 156 are loaded in the memory 174.

The memory 164 is 98 bytes large. The multiplexer 176 multiplexes the output of the memory 164 to the input of the memory 178, so that the 98 bytes of information stored in the memory 164 can be stored in the memory 178. Next, the multiplexer 176 multiplexes the output of the memory 144 to the input of the memory 178, so that the remaining 8 bytes of the surplus information stored in the memory 144 can be stored in the next 8 bytes of the memory 178.

Outputs of the memories 170, 174 and 178 are coupled to an input of a corresponding multiplexer 112, 116 and 120 respectively. The multiplexer 112 further receives, apart from the already mentioned sync word and ID word, the count value CV₁, the DC₀ and DC₁ information of the datablocks MB₀ and MB₁ and parity information. The multiplexer 116 further receives, the count value CV₂, the DC₂ and DC₃ information of the datablocks MB₂ and MB₃ and parity information. The multiplexer 120 further receives, the count value CV₃, the DC₄ information of the datablock MB₄, the auxiliary information and parity information.

The multiplexers 112, 16 and 120 subsequently switch all their inputs, starting with the top input and further down towards their lowest input, to their outputs, which outputs are coupled to an input of a corresponding packet memory 180, 182 and 184 respectively. The packet memories are 141 bytes large and store the information selected by the multiplexers, so that the information content of figure 5 is obtained.

Outputs of the memories 180, 182 and 184 are coupled to a combination unit 186, which has an output coupled to the output 188. The output 188 corresponds to the output of the formatting unit 4 in figure 1. The serial datastream of the three packets P₁, P₂ and P₃ is now available at the output 188 for recording on the record carrier.

The above encoding step is repeated for the next five subpictures of the picture.

Figure 21 shows a slightly different format of the packets, compared to the format of the packets shown in figure 5. In this new format, scale factor information corresponding to each datablock are also stored in the second packet portion of the packets. This is shown in figure 21a for a first packet P₁. Scale factor information SF₀ for the datablock MB₀ is included between the DC information and the AC information of the datablock MB₀, and scale factor information SF₁ for the datablock MB₁ is included between the DC information and the AC information of the datablock MB₁.

The use of the scale factor will now be explained briefly. It is known in the art that groups of datablocks can be compressed into a fixed number of bits. In the publication 'An intraframe feedforward coding system' by P.H.N. de With et al in Proc. 12th Benelux Symposium on Information Theory, ISBN 90-71048-07-1, pp. 63-9, Veldhoven (NL), May 1991, a system is described in which a group of datablocks is first analyzed with several quantization strategies in parallel before the final coding takes place. Then one quantizer strategy is selected, i.e. the strategy that yields the desired bit rate after compression. The number of the adopted quantizer (strategy) needs to be transmitted in the coded data stream, so that at the decoder side the correct inverse quantization is applied. In the description of the invention, we have termed the applied quantizer strategy for compression the (quantizer) scale factor. Since the invention is based on separate or independent processing of the two datablocks in a datapacket, it can be understood that the scale factor is recorded for each datapacket independently and thus separately.

The format of the second packet P₂ is identical to the format of figure 21a. Figure 21b shows the format for the third packet P₃, and includes the scale factor information SF₄ for the datablock MB₄, which is included between the DC information and the AC information of the said datablock.

Figure 22 shows an embodiment of a reproduction arrangement for reproducing the video information recorded on a record carrier by means of the recording arrangement described above. The reproducing arrangement comprises reproducing means 200 for reading a signal from the tracks on the record carrier, an output of which is coupled to an input of a channel decoder 202. The channel decoder realizes a decoding on the signal read from the track which is inverse to the channel encoding carried out by the encoder 5 of figure 1. The output signal of the channel decoder 202 is in the form of a serial data stream of the packets described above. An output of the decoder 202 is coupled to an input of deformatting means 204. The deformatting means 204 are adapted to retrieve datablocks of information included in said plurality of packets, that is: the information of the datablocks MB₀ and MB₁ from a first packet, the information of the datablocks MB₂ and MB₃ from a second packet and the information of the datablock MB₄ from a third packet. Each datablock comprises data reduced videoinformation, which defines a subpicture of a plurality of subpictures in which a picture is divided. An output of the deformatting means 204 is coupled to an input of data expansion means 206 for expanding the data reduced video information included in the datablocks, so as to obtain a replica of the original digital video signal. The digital video signal is applied to a D/A converter 208 so as to obtain an analog version of the replica of the digital video signal.

More specifically, the deformatting means 204 comprise a count value detector unit (not shown) so as to retrieve the count value CVᵢ stored in the second packet portion of a packet. Further, scale factor detector means (not shown) may be provided to retrieve the scale factor information from the second packet portions of the packets.

## Claims

1. An arrangement for recording, at a predetermined recording speed, a digital video signal in a track on a record carrier, the recording arrangement comprising
- an input terminal (1) for receiving the digital video signal,
- data compression means (3) for data reducing a the digital video signal so as to obtain data reduced video information in the form of a plurality of datablocks, each datablock defining a subpicture of a plurality of subpictures in which a picture is divided, a datablock comprising a number of n DC coefficients, where n is an integer for which holds that n > 1, a plurality of most significant AC coefficients and a plurality of least significant AC coefficients,
- formatting means (4) for including datablocks in a plurality of packets for recording in a track, a packet comprising a first packet portion including a synchronisation word and an identification word, a second packet portion comprising data reduced video information,
- recording means (7,8) for recording the plurality of packets in a track on the record carrier, characterized in that, the formatting means are adapted to store the information included in a first and a second datablock in the second packet portion (PP₂) of a first packet (Pᵢ), such that the n DC coefficients of the first datablock (DC₀) are stored first, the plurality of most significant AC coefficients (MAC₀) of the first datablock are stored next, the n DC coefficients (DC₁) of the second datablock are stored last in the second packet portion, and the plurality of most significant AC coefficients (MAC₁) of the second datablock are stored before the n DC coefficients of the second datablock in the second packet portion.

2. An arrangement as claimed in claim 1, characterized in that, the formatting means are further adapted to store the information included in a third and a fourth datablock in the second packet portion of a second packet (Pᵢ₊₁), such that the n DC coefficients (DC₂) of the third datablock are stored first, the plurality of most significant AC coefficients (MAC₂) of the third datablock are stored next, the n DC coefficients (DC₃) of the fourth datablock are stored last in the second packet portion, and the plurality of most significant AC coefficients (MAC₃) of the fourth datablock are stored before the n DC coefficients of the fourth datablock in the second packet portion.

3. An arrangement as claimed in claim 1 or 2, the formatting means also being adapted to include an auxiliary signal (AUX) in a plurality of packets for recording in a track, characterized in that, the formatting means being adapted to store the information included in a fifth datablock and auxiliary signal information in the second packet portion of a third packet (Pᵢ₊₂), such that the n DC coefficients (DC₄) of the fifth datablock are stored first, the plurality of most significant AC coefficients (MAC₄) of the fifth datablock are stored next, and the auxiliary signal information (AUX) is stored last in the second packet portion.

4. An arrangement as claimed in claim 1 or 2, the formatting means also being adapted to include an auxiliary signal (AUX) in a plurality of packets for recording in a track, characterized in that, the formatting means being adapted to store the information included in a fifth datablock and auxiliary signal information in the second packet portion of a third packet (Pᵢ₊₂), such that the auxiliary signal information is stored first, the n DC coefficients of the fifth datablock are stored last, in the second packet portion, and the plurality of most significant AC coefficients of the fifth datablock are stored before the n DC coefficients of the fifth datablock in the second packet portion.

5. An arrangement as claimed in anyone of the preceding claims, characterized in that, it comprises count value generating means (128) for generating a count value (CV₁) corresponding to the number of bytes needed to represent the AC coefficients of the datablocks included in the second packet portion of a packet.

6. An arrangement as claimed in claim 5, characterized in that, the count value generating means being adapted to generate for the i-th packet, a count value CV_{i,} corresponding to the number of bytes needed to represent the AC coefficients of the (2i-1)-th and (2i)-th datablock, the formatting means (4) further being adapted to store the count value CVᵢ in the second packet portion of the i-th packet, where i is 1 or 2.

7. An arrangement as claimed in claim 6, characterized in that, if the count value CVᵢ is smaller than or equal to the number of bytes Nᵢ available in that part of the second packet portion of the i-th packet located between the DC coefficients of the (2i-1)-th and (2i)-th datablock stored in said second packet portion, the formatting means (4) are further adapted to store least significant AC coefficients of the (2i-1)-th datablock after the most significant AC coefficients of the (2i-1)-th datablock in said part of said second packet portion and least significant AC coefficients of the (2i)-th datablock are stored before the most significant coefficients of the (2i)-th datablock in said part of said second packet portion.

8. An arrangement as claimed in claim 7, characterized in that, if CVᵢ is smaller than Nᵢ, the formatting means (4) are further adapted to store least significant AC coefficients of a j-th datablock in the remaining part of the second packet portion between the least significant coefficients of the (2i-1)-th and (2i)-th datablock, where j equals one of the integers 1 to 5 and is unequal to (2i-1) and (2i).

9. An arrangement as claimed in claim 6, characterized in that, the count value generating means (108) are further adapted to generate a count value CV₃ corresponding to the number of bytes needed to represent the AC coefficients of the fifth datablock, the formatting means (4) further being adapted to store the count value CV₃ in the second packet portion of the third packet of the fifth datablock.

10. An arrangement as claimed in claim 9, characterized in that, if the count value CV₃ is smaller than or equal to the number of bytes N₃ available in that part of the second packet portion of the third packet located between the DC coefficients of the fifth datablock and the auxiliary information stored in said second packet portion, the formatting means (4) are further adapted to store the least significant AC coefficients of the fifth datablock after the most significant AC coefficients of the fifth datablock in said part of said second packet portion.

11. An arrangement as claimed in claim 10, characterized in that, if CV₃ is smaller than N₃, the formatting means (4) are further adapted to store least significant AC coefficients of a j-th datablock in the remaining part of the second packet portion between the least significant coefficients of the fifth datablock and the auxiliary information, where j equals one of the integers 1 to 4.

12. An arrangement as claimed in claim 1, 2, 3 or 4, further comprising scale factor generating means for generating a scale factor (SF₀) for the AC coefficients of each of the datablocks, characterized in that, the formatting means (4) are further adapted to store the scale factor for the (2i-1)-th datablock between the DC coefficients (DC₀) and the most significant AC coefficients (MAC₀) of the (2i-1)-th datablock in the second packet portion of the i-th packet, and are further adapted to store the scale factor (SF₁) for the (2i)-th datablock between the DC coefficients (DC₁) and the most significant AC coefficients (MAC₁) of the (2i)-th datablock in the second packet portion of the i-th packet, where i is 1 or 2.

13. An arrangement as claimed in claim 12, characterized in that, the formatting means are further adapted to store the scale factor (SF₄) for the fifth datablock between the DC coefficients (DC₄) and the most significant AC coefficients (MAC₄) of the fifth datablock in the second packet portion of the third packet.

14. An arrangement as claimed in claim 1 or 2, characterized in that, the DC coefficients and most significant AC coefficients of the (2i)-th datablock are stored in the second packet portion of the i-th packet in a reverse order compared to the order in which the DC and most significant AC coefficients of the (2i-1)-th datablock are stored in the second packet portion of the i-th packet, where i is 1 or 2.

15. Record carrier having a digital video signal recorded in a track on said record carrier, so as to enable reproduction of the digital video signal at a speed other than a nominal reproduction speed, the digital video signal being data compressed into a plurality of datablocks, each datablock defining a subpicture of a plurality of subpictures in which a picture is divided, a datablock comprising a number of n DC coefficients, where n is an integer for which holds that n > 1, a plurality of most significant AC coefficients and a plurality of least significant AC coefficients, the datablocks being included in a plurality of packets, a packet comprising a first packet portion including a synchronisation word and an identification word, a second packet portion comprising data reduced video information, characterized in that the information included in a first and a second datablock has been stored in the second packet portion (PP2) of a first packet (Pᵢ), such that the n DC coefficients (DC₀) of the first datablock are stored first, the plurality of most significant AC coefficients (MAC₀) of the first datablock are stored next, the n DC coefficients (DC₁) of the second datablock are stored last in the second packet portion, and the plurality of most significant AC coefficients (MAC₁) of the second datablock are stored before the n DC coefficients of the second datablock in the second packet portion.

16. An arrangement for reproducing a digital video signal from a track on a record carrier, the reproducing arrangement comprising
- reproducing means (200) for reading a signal comprising a plurality of packets recorded in a track on the record carrier,
- deformatting means (204) for retrieving datablocks of information included in said plurality of packets, a packet comprising a first packet portion including a synchronisation word and an identification word, a second packet portion comprising data reduced video information, each datablock defining a subpicture of a plurality of subpictures in which a picture is divided, a datablock comprising a number of n DC coefficients, a plurality of most significant AC coefficients and a plurality of least significant AC coefficients, where n is an integer for which holds that n>1,
- data expansion means (206) for expanding data reduced video information included in a plurality of datablocks, so as to obtain a replica of the original digital video signal,
- an output terminal for supplying the replica of the digital video signal,
characterized in that, the deformatting means (204) are adapted to retrieve the identification word (ID) from the first packet portion (PP₁), to retrieve the information corresponding to a first and a second datablock from the second packet portion (PP₂) of a first packet, so as to obtain the n DC coefficients (DC₀) of the first datablock which are stored first in said second packet portion, so as to obtain the plurality of most significant AC coefficients (MAC₀) of the first datablock which are stored next in said second packet portion, so as to obtain the n DC coefficients (DL₁) of the second datablock which are stored last in the second packet portion, and so as to obtain the plurality of most significant AC coefficients (MAC₁) of the second datablock which are stored before the n DC coefficients of the second datablock in the second packet portion.

17. Arrangement as claimed in claim 16, characterized in that the deformatting means (204) are further adapted to retrieve a count value CVᵢ stored in a packet, the count value corresponding to the number of bytes needed to represent the AC coefficients of the datablocks included in the second packet portion of a packet.

18. Arrangement as claimed in claim 17, characterized in that the deformatting means (204) are adapted to differentiate, in response to a count value retrieved from a packet, between AC coefficients of datablocks having their DC and AC coefficients stored in the second packet portion of said packet and AC coefficients originating from datablocks having their DC coefficients stored in one or more of the other packets.

19. Method of recording, at a predetermined recording speed, a digital video signal in a track on a record carrier, the recording method comprising the steps of
- receiving the digital video signal,
- data reducing the digital video signal so as to obtain data reduced video information in the form of a plurality of datablocks, each datablock defining a subpicture of a plurality of subpictures in which a picture is divided, a datablock comprising a number of n DC coefficients, where n is an integer for which holds that n > 1, a plurality of most significant AC coefficients and a plurality of least significant AC coefficients,
- formatting datablocks into a plurality of packets for recording in a track, a packet comprising a first packet portion including a synchronisation word and an identification word, a second packet portion comprising data reduced video information,
- recording the plurality of packets in a track on the record carrier, characterized in that, the formatting step comprises storing the information included in a first and a second datablock in the second packet portion of a first packet, such that the n DC coefficients of the first datablock are stored first, the plurality of most significant AC coefficients of the first datablock are stored next, the n DC coefficients of the second datablock are stored last in the second packet portion, and the plurality of most significant AC coefficients of the second datablock are stored before the n DC coefficients of the second datablock in the second packet portion.

## Patentansprüche

1. Anordnung zur Aufzeichnung, mit einer vorbestimmten Aufzeichnungsrate, eines digitalen Videosignals in einer Spur auf einem Aufzeichnungsträger, wobei diese Aufzeichnungsanordnung die nachfolgenden Elemente umfasst:
- eine Eingangsklemme (1) zum Empfangen des digitalen Videosignals,
- Datenkompressionsmittel (3) zur Datenreduktion im digitalen Videosignal zum Erhalten datenreduzierter Videoinformation in Form einer Anzahl Datenblöcke, wobei jeder Datenblock ein Teilbild einer Anzahl Teilbilder definiert, worin ein Bild aufgeteilt ist, wobei ein Datenblock eine Anzahl von n DC Koeffizienten aufweist, wobei n eine ganze Zahl ist, für die gilt, dass n > 1 ist, weiterhin eine Anzahl signifikantester AC Koeffizienten und eine Anzahl weniger signifikanter AC Koeffizienten,
- Formatierungsmittel (4) zum Einschließen von Datenblöcken in einer Anzahl von Paketen zur Aufzeichnung in einer Spur, wobei ein Paket einen ersten Paketteil mit einem Synchronisationswort und einem Identifikationswort aufweist, wobei ein zweiter Paketteil datenreduzierte Videoinformation enthält,
- Aufzeichnungsmittel (7, 8) zur Aufzeichnung der Anzahl Pakete in einer Spur auf den Aufzeichnungsträger, dadurch gekennzeichnet, dass die Formatierungsmittel die in einem ersten und einem zweiten Datenblock eingeschlossene Information in dem zweiten Paketteil (PP2) eines ersten Pakets (P₁) derart speichern, dass die n DC Koeffizienten des ersten Datenblocks (DC₀) zuerst gespeichert werden, dass danach die Anzahl signifikantester AC Koeffizienten (MAC₀) des ersten Datenblocks gespeichert werden, dass zuletzt die n DC Koeffizienten (DC₁) des zweiten Datenblocks in dem zweiten Paketteil gespeichert werden, und dass die Anzahl signifikantester AC Koeffizienten (MAC₁) des zweiten Datenblocks vor den n DC Koeffizienten des zweiten Datenblocks in dem zweiten Paketteil gespeichert werden.

2. Anordnung nach Anspruch 1, dadurch gekennzeichnet, dass die Formatierungsmittel weiterhin die in einem dritten und einem vierten Datenblock in dem zweiten Paketteil eines zweiten Pakets (Pᵢ₊₁) eingeschlossene Information derart speichert, dass die n DC Koeffizienten (DC₂) des dritten Datenblocks zuerst gespeichert werden, dass danach die Anzahl signifikantester AC Koeffizienten (MAC₂) des dritten Datenblocks gespeichert werden, und dass zum Schluss die n DC Koeffizienten (DC₃) des vierten Datenblocks in dem zweiten Paketteil gespeichert werden und die Anzahl signifikantester AC Koeffizienten (MAC₃) des vierten Datenblocks in dem zweiten Paketteil gespeichert werden, bevor die n DC Koeffizienten des vierten Datenblocks in dem zweiten Paketteil gespeichert werden.

3. Anordnung nach Anspruch 1 oder 2, wobei die Formatierungsmittel ebenfalls ein Hilfssignal (AUX) in einer Anzahl Pakete zur Aufzeichnung in einer Spur enthalten, dadurch gekennzeichnet, dass die Formatierungsmittel die in dem fünften Datenblock eingeschlossene Information und die Hilfssignalinformation in dem zweiten Paketteil eines dritten Pakets (Pᵢ₊₂) derart speichern, dass die n DC Koeffizienten (DC₄) des fünften Datenblocks zuerst gespeichert werden, dass danach die Anzahl signifikantester AC Koeffizienten (MAC₄) des fünften Datenblocks gespeichert werden und dass zum Schluss die Hilfssignalinformation (AUX) in dem zweiten Paketteil gespeichert wird.

4. Anordnung nach Anspruch 1 oder 2, wobei die Formatierungsmittel ebenfalls ein Hilfssignal (AUX) in einer Anzahl Pakete zur Aufzeichnung in einer Spur enthalten, dadurch gekennzeichnet, dass die Formatierungsmittel die in dem fünften Datenblock eingeschlossene Information und die Hilfssignalinformation in dem zweiten Paketteil eines dritten Pakets (Pᵢ₊₂) derart speichern, dass die Hilfssignalinformation zuerst gespeichert wird, dass danach die n DC Koeffizienten des fünften Datenblocks gespeichert werden, und dass die Anzahl signifikantester AC Koeffizienten des fünften Datenblocks vor den n DC Koeffizienten des fünften Datenblocks in dem zweiten Paketteil gespeichert werden.

5. Anordnung nach einem der vorstehenden Ansprüche, dadurch gekennzeichnet, dass sie Zählerwerterzeugungsmittel (128) umfasst zum Erzeugen eines Zählerwertes (CV₁), welcher der Anzahl Bytes, erforderlich zum Darstellen der AC Koeffizienten der Datenblöcke in dem zweiten Paketteil eines Pakets entspricht.

6. Anordnung nach Anspruch 5, dadurch gekennzeichnet, dass die Zählerwerterzeugungsmittel für das i. Paket einen Zählerwert CVᵢ erzeugen, welcher der Anzahl Bytes, erforderlich zum Darstellen der AC Koeffizienten des (2i-1). und (2i). Datenblocks entspricht, wobei die Formatierungsmittel (4) weiterhin den Zählerwert CVᵢ in dem zweiten Paketteil des i. Pakets speichern, wobei i 1 oder 2 ist.

7. Anordnung nach Anspruch 6, dadurch gekennzeichnet, dass wenn der Zählerwert CVᵢ kleiner ist als oder gleich der Anzahl Bytes Nᵢ, verfügbar in diesem Teil des zweiten Paketteils des i. Pakets zwischen den DC Koeffizienten des (2i-1). und (2i). Datenblocks, der in dem genannten zweiten Paketteil gespeichert ist, wobei die Formatierungsmittel (4) weiterhin weniger signifikante AC Koeffizienten des (2i-1). Datenblocks hinter den signifikantesten AC Koeffizienten des (2i-1). Datenblocks in dem genannten Teil des genannten zweiten Paketteils und weniger signifikante Koeffizienten des (2i). Datenblocks vor den signifikantesten Koeffizienten des (2i). Datenblocks in dem genannten Teil des zweiten Paketteils speichern.

8. Anordnung nach Anspruch 7, dadurch gekennzeichnet, dass wenn CVᵢ kleiner ist als Nᵢ, die Formatierungsmittel (4) weniger signifikante AC Koeffizienten eines j. Datenblocks in dem restlichen Teil des zweiten Paketteils zwischen den weniger signifikanten Koeffizienten des (2i-1). und des (2i). Datenblocks speichern, wobei j einer der ganzen Zahlen 1 bis 5 entspricht und ungleich (2i-1) und (2i) ist.

9. Anordnung nach Anspruch 6, dadurch gekennzeichnet, dass die Zahlerwerterzeugungsmittel (108) einen Zählerwert CV₃ erzeugen, entsprechend der Anzahl Bytes, erforderlich zum darstellen der AC Koeffizienten des fünften Datenblocks, wobei die Formatierungsmittel (4) den Zählerwert CV₃ in dem zweiten Paketteil des dritten Pakets des fünften Datenblocks speichern.

10. Anordnung nach Anspruch 9, dadurch gekennzeichnet, dass, wenn der Zählerwert CV₃ kleiner ist als oder gleich der Anzahl in diesem Teil des zweiten Paketteils des dritten Pakets zwischen den DC Koeffizienten des fünften Datenblocks und der in dem genannten zweiten Paketteil gespeicherten Hilfsinformation verfügbarer Bytes N₃ ist, die Formatierungsmittel (4) weiterhin die weniger Signifikanten AC Koeffizienten des fünften Datenblocks hinter den signifikantesten AC Koeffizienten des Fünften Datenblocks in dem genannten Teil des genannten zweiten Paketteils speichern.

11. Anordnung nach Anspruch 10, dadurch gekennzeichnet, dass, wenn CV₃ kleiner als N₃ ist, die Formatierungsmittel (4) weiterhin weniger signifikante AC Koeffizienten des j. Datenblocks in dem restlichen Teil des zweiten Paketteils zwischen den weniger signifikaten Koeffizienten des fünften Datenblocks und der Hilfsinformation speichern, wobei j einer der ganzen Zahlen 1 bis 4 entspricht.

12. Anordnung nach Anspruch 1, 2, 3 oder 4, weiterhin mit Skalierungsfaktorerzeugungsmitteln zum Erzeugen eines Skalierungsfaktors (5 F₀) für die AC Koeffizienten jedes der Datenblöcke, dadurch gekennzeichnet, dass die Formatierungsmittel (4) weiterhin den Skalierungsfaktor für den (2i-1). Datenblock zwischen den DC Koeffizienten (DC₀) und den signifikantesten AC Koeffizienten (MAC₀) des (2i-1). Datenblocks in dem zweiten Paketteil des i. Pakets speichern, und weiterhin den Skalierungsfaktor (SF₁) für den (2i). Datenblock zwischen den DC Koeffizienten (DC₁) und den signifikantesten AC Koeffizienten (MAC₁) des (2i). Datenblocks in dem zweiten Paketteil des i. Pakets speichern, wobei 1 dem Wert 1 oder 2 entspricht.

13. Anordnung nach Anspruch 12, dadurch gekennzeichnet, dass die Formatierungsmittel weiterhin den Skalierungsfaktor (SF₄) für den fünften Datenblock zwischen den DC Koeffizienten (DC₄) und den signifikantesten AC Koeffizienten (MAC₄) des fünften Datenblocks in dem zweiten Paketteil des dritten Pakets speichern.

14. Anordnung nach Anspruch 1 oder 2, dadurch gekennzeichnet, dass die DC Koeffizienten und die signifikantesten AC Koeffizienten des (2i). Datenblocks in dem zweiten Paketteil des i. Pakets in umgekehrter Reihenfolge im Vergleich zu der Reihenfolge, in der die DC und die signifikantesten AC Koeffizienten des (2i-1). Datenblocks in dem zweiten Paketteil des i. Pakets gespeichert worden sind, gespeichert werden, wobei 1 dem Wert 1 oder 2 entspricht.

15. Aufzeichnungsträger, bei dem in einer Spur auf dem genannten Aufzeichnungsträger ein digitales Videosignal aufgezeichnet worden ist, wodurch eine Reproduktion des digitalen Videosignals möglich ist mit einer Geschwindigkeit, die anders ist als die Nenn-Reproduktionsgeschwindigkeit, wobei das digitale Videosignal in eine Anzahl Datenblöcke datenkomprimiert ist, wobei jeder Datenblock ein Teilbild einer Anzahl Teilbilder definiert, worin ein Bild aufgeteilt ist, wobei ein Datenblock eine Anzahl von n DC Koeffizienten, wobei n eine ganze Zahl ist, für die gilt, dass n > 1 ist, eine Anzahl signifikantester AC Koeffizienten und eine Anzahl weniger signifikanter AC Koeffizienten aufweist, wobei die Datenblöcke in einer Anzahl Pakete enthalten sind, wobei ein Paket einen ersten Paketteil mit einem Synchronisationswort und einem Kennwort und einen zweiten Paketteil mit datenreduzierter Videoinformation aufweist, dadurch gekennzeichnet, dass die Information in einem ersten und einem zweiten Datenblock in dem zweiten Paketteil (PP2) eines ersten Pakets (Pᵢ) derart gespeichert ist, dass die n DC Koeffizienten (DC₀) des ersten Datenblocks zuerst gespeichert werden, die Anzahl signifikantester AC Koeffizienten (MAC₀) des ersten Datenblocks danach gespeichert werden, die n DC Koeffizienten (DC₁) des zweiten Datenblocks zuletzt in dem zweiten Paketteil gespeichert werden, und die Anzahl signifikantester AC Koeffizienten (MAC₁) des zweiten Datenblocks vor den n DC Koeffizienten des zweiten Datenblocks in dem zweiten Paketteil gespeichert werden.

16. Anordnung zur Reproduktion eines digitalen Videosignals aus einer Spur auf einem Aufzeichnungsträger, wobei die Reproduktionsanordnung die nachfolgenden Elemente aufweist:
- Reproduktionsmittel (200) zum Auslesen eines Signals mit einer Anzahl in einer Spur auf dem Aufzeichnungsträger aufgezeichneter Pakete,
- Deformatierungsmittel (204) zum Rückgewinnen von Informationsdatenblöcken in der genannten Anzahl Pakete, wobei ein Paket einen ersten Paketteil mit einem Synchronisationswort und einem Kennwort aufweist, und einen zweiten Paketteil mit datenreduzierter Videoinformation aufweist, wobei jeder Datenblock ein Teilbild einer Anzahl Teilbilder definiert, worin ein Bild aufgeteilt ist, wobei ein Datenblock eine Anzahl von n DC Koeffizienten, eine Anzahl signifikantester AC Koeffizienten und eine Anzahl weniger signifikanter AC Koeffizienten aufweist, wobei n eine ganze Zahl ist, für die Gilt, dass n > 1 ist,
- Datenexpansionsmittel (206) zum Expandieren datenreduzierter Videoinformation in einer Anzahl Datenblöcke zum Erhalten einer Replik des ursprünglichen digitalen Videosignals,
- eine Ausgangsklemme zum Liefern der Replik des digitalen Videosignals, dadurch gekennzeichnet, dass die Deformatierungsmittel (204) das Kennwort (ID) aus dem ersten Paketteil (PP₁) zurückgewinnen zum Zurückgewinnen der Information entsprechend einem ersten und einem zweiten Datenblock aus dem zweiten Paketteil (PP₂) eines; ersten Pakets, zum Erhalten der n Koeffizienten (DC₀) des ersten Datenblocks, die zuerst in dem genannten zweiten Paketteil gespeichert sind, zum Erhalten der Anzahl signifikantester AC Koeffizienten (MAC₀) des ersten Datenblocks, die danach in dem genannten zweiten Paketteil gespeichert werden, zum Erhalten der n SC Koeffizienten (DC₁) des zweiten Datenblocks, die zuletzt in dem zweiten Paketteil gespeichert werden, und zum Erhalten der Anzahl signifikantester AC Koeffizienten (MAC₁) des zweiten Datenblocks, die vor den n DC Koeffizienten des zweiten Datenblocks in dem zweiten Paketteil gespeichert werden.

17. Anordnung nach Anspruch 16, dadurch gekennzeichnet, dass die Deformatierungsmittel (204) weiterhin einen in einem Paket gespeicherten Zählerwert CVᵢ zurückgewinnen, wobei der Zählerwert der Anzahl Bytes, erforderlich zum Darstellen der AC Koeffizienten der Datenblöcke in dem zweiten Paketteil eines Pakets, entspricht.

18. Anordnung nach Anspruch 17, dadurch gekennzeichnet, dass die Deformatierungsmittel (204) in Reaktion auf einen von einem Paket zurückgewonnenen Zählerwert zwischen AC Koeffizienten von Datenblöcken, deren DC und AC Koeffizienten in dem zweiten Paketteil des genannten Pakets gespeichert sind und AC Koeffizienten, die von Datenblöcken herrühren, deren DC Koeffizienten in einem oder mehreren der anderen Pakete gespeichert sind, differenzieren.

19. Verfahren zur Aufzeichnung eines digitalen Videosignals mit einer vorbestimmten Aufzeichnungsgeschwindigkeit in einer Spur auf einem Aufzeichnungsträger, wobei dieses Aufzeichnungsverfahren die nachfolgenden Verfahrensschritte umfasst:
- das Empfangen des digitalen Videosignals,
- das Reduzieren von Daten des digitalen Videosignals zum Erhalten datenreduzierter Videoinformation in Form einer Anzahl Datenblöcke, wobei jeder Datenblock ein Teilbild einer Anzahl Teilbilder definiert, worin ein Bild aufgeteilt ist, wobei ein Datenblock eine Anzahl von n DC Koeffizienten, wobei n eine ganze Zahl ist, für die gilt, dass n > 1 ist, eine Anzahl signifikantester AC Koeffizienten und eine Anzahl weniger signifikanter AC Koeffizienten aufweist,
- das Formatieren von Datenblöcken in eine Anzahl Pakete zur Aufzeichnung in einer Spur, wobei ein Paket einen ersten Paketteil mit einem Synchronisationswort und einem Kennwort, und einen zweiten Paketteil mit datenreduzierter Videoinformation aufweist,
- das Aufzeichnen der Anzahl Pakete in einer Spur auf dem Aufzeichnungsträger, dadurch gekennzeichnet, dass der Formatierungsschritt das Speichern der Information in einem ersten und einem zweiten Datenblock in dem zweiten Paketteil eines ersten Pakets umfasst, und zwar derart, dass die n DC Koeffizienten des ersten Datenblocks zuerst gespeichert werden, dass die Anzahl signifikantester AC Koeffizienten des ersten Datenblocks danach gespeichert werden und dass die n DC Koeffizienten des zweiten Datenblocks zuletzt in dem zweiten Paketteil gespeichert werden, und dass die Anzahl signifikantester AC Koeffizienten des zweiten Datenblocks vor den n DC Koeffizienten des zweiten Datenblocks in dem zweiten Paketteil gespeichert werden.

## Revendications

1. Montage pour l'enregistrement, à une vitesse d'enregistrement prédéterminée, d'un signal vidéo numérique sur une piste d'un support d'enregistrement, le montage pour enregistrement comprenant
- une borne d'entrée (1) pour recevoir le signal vidéo numérique;
- des moyens de compression des données (3) pour comprimer le signal vidéo numérique de façon à obtenir des informations vidéo comprimées sous la forme d'une pluralité de blocs de données, chaque bloc de données définissant une sous-image d'une pluralité de sous-images en laquelle une image est divisée, un bloc de données comprenant un certain nombre n de coefficients DC, n étant un entier pour lequel n > 1, une pluralité de coefficients AC les plus significatifs et une pluralité de coefficients AC les moins significatifs;
- des moyens de formatage (4) pour inclure les blocs de données dans une pluralité de paquets pour enregistrement sur une piste, un paquet comprenant une première partie de paquet incluant un mot de synchronisation et un mot d'identification, une deuxième partie de paquet comprenant des informations vidéo comprimées, et
- des moyens d'enregistrement (7, 8) pour enregistrer la pluralité de paquets sur une piste sur le support d'enregistrement,
caractérisé en ce que les moyens de formatage sont conçus pour stocker les informations incluses dans un premier et un deuxième blocs de données dans la deuxième partie de paquet (PP₂) d'un premier paquet (Pᵢ), de telle façon que les n coefficients DC (DC₀) du premier bloc de données soient stockés en premier lieu, que la pluralité de coefficients AC les plus significatifs (MAC₀) du premier bloc de données soient stockés ensuite, que les n coefficients DC (DC₁) du deuxième bloc de données soient stockés en dernier dans la deuxième partie de paquet et que la pluralité de coefficients AC les plus significatifs (MAC₁) du deuxième bloc de données soient stockés avant les n coefficients DC du deuxième bloc de données dans la deuxième partie de paquet.

2. Montage suivant la revendication 1, caractérisé en ce que les moyens de formatage sont en outre conçus pour stocker les informations incluses dans un troisième et un quatrième blocs de données dans la deuxième partie de paquet d'un deuxième paquet (Pᵢ₊₁), de telle façon que les n coefficients DC (DC₂) du troisième bloc de données soient stockés en premier lieu, que la pluralité des coefficients AC les plus significatifs (MAC₂) du troisième bloc de données soient stockés ensuite, que les n coefficients DC (DC₃) du quatrième bloc de données soient stockés en dernier lieu dans la deuxième partie de paquet et que la pluralité des coefficients AC les plus significatifs (MAC₃) du quatrième bloc de données soient stockés avant les n coefficients DC du quatrième bloc de données dans la deuxième partie de paquet.

3. Montage suivant la revendication 1 ou 2, les moyens de formatage étant également conçus pour inclure un signal auxiliaire (AUX) dans une pluralité de paquets pour enregistrement sur une piste, caractérisé en ce que les moyens de formatage sont conçus pour stocker les informations incluses dans un cinquième bloc de données et l'information de signal auxiliaire dans la deuxième partie de paquet d'un troisième paquet (Pᵢ₊₂), de telle façon que les n coefficients DC (DC₄) du cinquième bloc de données soient stockés en premier lieu, que la pluralité des coefficients AC les plus significatifs (MAC₄) du cinquième bloc de données soient stockés ensuite, et que l'information de signal auxiliaire (AUX) soit stockée en dernier lieu dans la deuxième partie de paquet.

4. Montage suivant la revendication 1 ou 2, les moyens de formatage étant également conçus pour inclure un signal auxiliaire (AUX) dans une pluralité de paquets pour enregistrement sur une piste, caractérisé en ce que les moyens de formatage sont conçus pour stocker les informations incluses dans un cinquième bloc de données et l'information de signal auxiliaire dans la deuxième partie de paquet d'un troisième paquet (Pᵢ₊₂), de telle façon que l'information de signal auxiliaire soit stockée en premier lieu, que les n coefficients DC du cinquième bloc de données soient stockés en dernier lieu dans la deuxième partie de paquet et que la pluralité des coefficients AC les plus significatifs du cinquième bloc de données soient stockés avant les n coefficients DC du cinquième bloc de données dans la deuxième partie de paquet.

5. Montage suivant l'une quelconque des revendications précédentes, caractérisé en ce qu'il comprend des moyens de production (128) d'une valeur de comptage pour produire une valeur de comptage (CV₁) correspondant au nombre de multiplets requis pour représenter les coefficients AC des blocs de données inclus dans la deuxième partie de paquet d'un paquet.

6. Montage suivant la revendication 5, caractérisé en ce que les moyens de production d'une valeur de comptage sont conçus pour produire pour le i^{e} paquet une valeur de comptage CVᵢ correspondant au nombre de multiplets requis pour représenter les coefficients AC des (2i-1)^{e} et (2i)^{e} blocs de données, les moyens de formatage (4) étant en outre conçus pour stocker la valeur de comptage CVᵢ dans la deuxième partie de paquet du i^{e} paquet, où i est égal à 1 ou 2.

7. Montage suivant la revendication 6, caractérisé en ce que, si la valeur de comptage CVᵢ est inférieure ou égale au nombre de multiplets Nᵢ disponibles dans la partie de la deuxième partie de paquet du i^{e} paquet qui est située entre les coefficients DC des (2i-1)^{e} et (2i)^{e} blocs de données stockés dans ladite deuxième partie de paquet, les moyens de formatage (4) sont en outre conçus pour stocker les coefficients AC les moins significatifs du (2i-1)^{e} bloc de données après les coefficients AC les plus significatifs du (2i-1)^{e} bloc de données dans ladite partie de ladite deuxième partie de paquet et les coefficients AC les moins significatifs du (2i)^{e} bloc de données sont stockés avant les coefficients AC les plus significatifs du (2i)^{e} bloc de données dans ladite partie de ladite deuxième partie de paquet.

8. Montage suivant la revendication 7, caractérisé en ce que, si CVᵢ est inférieur à Nᵢ, les moyens de formatage (4) sont en outre conçus pour stocker les coefficients AC les moins significatifs d'un j^{e} bloc de données dans la partie restante de la deuxième partie de paquet entre les coefficients les moins significatifs du (2i-1)^{e} et du (2i)^{e} blocs de données, où j est égal à un des entiers de 1 à 5 et est différent de (2i-1) et (2i).

9. Montage suivant la revendication 6, caractérisé en ce que les moyens de production d'une valeur de comptage (108) sont en outre conçus pour produire une valeur de comptage CV₃ correspondant au nombre de multiplets requis pour représenter les coefficients AC du cinquième bloc de données, les moyens de formatage (4) étant en outre conçus pour stocker la valeur de comptage CV₃ dans la deuxième partie de paquet du troisième paquet du cinquième bloc de données.

10. Montage suivant la revendication 9, caractérisé en ce que, si la valeur de comptage CV₃ est inférieure ou égale au nombre de multiplets N₃ disponibles dans la partie de la deuxième partie de paquet du troisième paquet située entre les coefficients DC du cinquième bloc de données et l'information auxiliaire stockée dans ladite deuxième partie de paquet, les moyens de formatage (4) sont en outre conçus pour stocker les coefficients AC les moins significatifs du cinquième bloc de données après les coefficients AC les plus significatifs du cinquième bloc de données dans ladite partie de ladite deuxième partie de paquet.

11. Montage suivant la revendication 10, caractérisé en ce que, si CV₃ est inférieure à N₃, les moyens de formatage (4) sont en outre conçus pour stocker les coefficients AC les moins significatifs d'un j^{e} bloc de données dans la partie restante de la deuxième partie de paquet entre les coefficients les moins significatifs du cinquième bloc de données et l'information auxiliaire, où j est égal à un des entiers 1 à 4.

12. Montage suivant la revendication 1, 2, 3 ou 4, comprenant en outre des moyens de production d'un facteur d'échelle pour produire un facteur d'échelle (SF₀) pour les coefficients AC de chacun des blocs de données, caractérisé en ce que les moyens de formatage (4) sont en outre conçus pour stocker le facteur d'échelle pour le (2i-1)^{e} bloc de données entre les coefficients DC (DC₀) et les coefficients AC les plus significatifs (MAC₀) du (2i-1)^{e} bloc de données dans la deuxième partie de paquet du i^{e} paquet et sont en outre conçus pour stocker le facteur d'échelle (SF₁) pour le (2i)^{e} bloc de données entre les coefficients DC (DC₁) et les coefficients AC les plus significatifs (MAC₁) du (2i)^{e} bloc de données dans la deuxième partie de paquet du i^{e} paquet, où i est égal à 1 ou 2.

13. Montage suivant la revendication 12, caractérisé en ce que les moyens de formatage (4) sont en outre conçus pour stocker le facteur d'échelle (SF₄) pour le cinquième bloc de données entre les coefficients DC (DC₄) et les coefficients AC les plus significatifs (MAC₄) du cinquième bloc de données dans la deuxième partie de paquet du troisième paquet.

14. Montage suivant la revendication 1 ou 2, caractérisé en ce que les coefficients DC et les coefficients AC les plus significatifs du (2i)^{e} bloc de données sont stockés dans la deuxième partie de paquet du i^{e} paquet dans un ordre inverse par rapport à celui dans lequel les coefficients DC et les coefficients AC les plus significatifs du (2i-1)^{e} bloc de données sont stockés dans la deuxième partie de paquet du i^{e} paquet, où est égal à 1 ou 2.

15. Support d'enregistrement comportant un signal vidéo numérique enregistré sur une piste dudit support d'enregistrement, de façon à permettre la reproduction du signal vidéo numérique à une vitesse autre qu'une vitesse de reproduction nominale, le signal vidéo numérique étant comprimé en une pluralité de blocs de données, chaque bloc de données définissant une sous-image d'une pluralité de sous-images en laquelle une image est divisée, un bloc de données comprenant un certain nombre n de coefficients DC où n est un entier pour lequel n > 1, une pluralité de coefficients AC les plus significatifs et une pluralité de coefficients AC les moins significatifs, les blocs de données étant inclus dans une pluralité de paquets, un paquet comprenant une première partie de paquet incluant un mot de synchronisation et un mot d'identification, une deuxième partie de paquet comprenant des informations vidéo comprimées, caractérisé en ce que les informations incluses dans un premier et un deuxième blocs de données ont été stockées dans la deuxième partie de paquet (PP₂) d'un premier paquet (P₁), de telle façon que les n coefficients DC (DC₀) du premier bloc de données soient stockés en premier lieu, que la pluralité de coefficients AC les plus significatifs (MAC₀) du premier bloc de données soient stockés ensuite, que les n coefficients DC (DC₁) du deuxième bloc de données soient stockés en dernier dans la deuxième partie de paquet et que la pluralité de coefficients AC les plus significatifs (MAC₁) du deuxième bloc de données soient stockés avant les n coefficients DC du deuxième bloc de données dans la deuxième partie de paquet.

16. Montage pour la reproduction d'un signal vidéo numérique d'une piste d'un support d'enregistrement, le montage pour reproduction comprenant
- des moyens de reproduction (200) pour lire un signal comprenant une pluralité de paquets enregistrés sur une piste du support d'enregistrement;
- des moyens de déformatage (204) pour récupérer des blocs de données d'information inclus dans ladite pluralité de paquets, un paquet comprenant une première partie de paquet incluant un mot de synchronisation et un mot d'identification, une deuxième partie de paquet comprenant des informations vidéo comprimées, chaque bloc de données définissant une sous-image d'une pluralité de sous-images en laquelle une image est divisée, un bloc de données comprenant un nombre n de coefficients DC, une pluralité de coefficients AC les plus significatifs et une pluralité de coefficients AC les moins significatifs, où n est un entier pour lequel n > 1;
- des moyens d'expansion de données (206) pour décomprimer les informations vidéo comprimées incluses dans une pluralité de blocs de données, de façon à obtenir une réplique du signal vidéo numérique original, et
- une borne de sortie pour fournir la réplique du signal vidéo numérique,
caractérisé en ce que les moyens de déformatage (204) sont conçus pour récupérer le mot d'identification (ID) de la première partie de paquet (PP₁), pour récupérer les informations correspondant à un premier et à un deuxième blocs de données de la deuxième partie de paquet (PP₂) d'un premier paquet, de façon à obtenir les n coefficients DC (DC₀) du premier bloc de données, qui sont stockés en premier dans ladite deuxième partie de paquet, de façon à obtenir la pluralité de coefficients AC les plus significatifs (MAC₀) du premier bloc de données, qui sont stockés ensuite dans ladite deuxième partie de paquet, de façon à obtenir les n coefficients DC (DC₁) du deuxième bloc de données, qui sont stockés en dernier dans ladite deuxième partie de paquet, et de façon à obtenir la pluralité de coefficients AC les plus significatifs (MAC₁) du deuxième bloc de données, qui sont stockés avant les n coefficients DC du deuxième bloc de données dans la deuxième partie de paquet.

17. Montage suivant la revendication 16, caractérisé en ce que les moyens de déformatage (204) sont en outre conçus pour récupérer une valeur de comptage CVᵢ stockée dans un paquet, la valeur de comptage correspondant au nombre de multiplets requis pour représenter les coefficients AC des blocs de données inclus dans la deuxième partie de paquet d'un paquet.

18. Montage suivant la revendication 17, caractérisé en ce que les moyens de déformatage (204) sont conçus pour différencier, en réaction à une valeur de comptage récupérée d'un paquet, les coefficients AC des blocs de données ayant leurs coefficients DC et AC stockés dans la deuxième partie de paquet dudit paquet, des coefficients AC provenant de blocs de données ayant leurs coefficients DC stockés dans un ou plusieurs des autres paquets.

19. Procédé d'enregistrement, à une vitesse d'enregistrement prédéterminée, d'un signal vidéo numérique sur une piste d'un support d'enregistrement, le procédé d'enregistrement comprenant les étapes de :
- réception du signal vidéo numérique;
- compression du signal vidéo numérique de façon à obtenir des informations vidéo comprimées sous la forme d'une pluralité de blocs de données, chaque bloc de données définissant une sous-image d'une pluralité de sous-images en laquelle une image est divisée, un bloc de données comprenant un nombre n de coefficients DC, n étant un entier pour lequel n > 1, une pluralité de coefficients AC les plus significatifs et une pluralité de coefficients AC les moins significatifs;
- formatage de blocs de données en une pluralité de paquets pour enregistrement sur une piste, un paquet comprenant une première partie de paquet incluant un mot de synchronisation et un mot d'identification, une deuxième partie de paquet comprenant des informations vidéo comprimées;
- enregistrement de la pluralité de paquets sur une piste du support d'enregistrement, caractérisé en ce que l'étape de formatage comprend le stockage des informations incluses dans un premier et dans un deuxième blocs de données dans la deuxième partie de paquet d'un premier paquet, de telle façon que les n coefficients DC du premier bloc de données soient stockés en premier lieu, que la pluralité de coefficients AC les plus significatifs du premier bloc de données soient stockés ensuite, que les n coefficients DC du deuxième bloc de données soient stockés en dernier dans la deuxième partie de paquet et que la pluralité de coefficients AC les plus significatifs du deuxième bloc de données soient stockés avant les n coefficients DC du deuxième bloc de données dans la deuxième partie de paquet.
